# EUROPEAN PATENT APPLICATION

(11) **EP 1 296 262 A1**
(43) Date of publication of application: **26.03.2003**
(21) Application number: 02019673.9
(22) Date of filing: 03.09.2002
(51) Int. Cl.: G06F 17/60

(54) **Computer program, apparatus and method for supporting project planning of new model vehicle**

(30) Priority: 19.09.2001 JP 2001285861
(71) Applicant: MAZDA MOTOR CORPORATION, Aki-gun, Hiroshima-ken (JP)
(72) Inventor: Nishiyama, Akito, Fuchuo-cho, Aki-gun, Hiroshima-ken (JP)
(74) Representative: Gossel, Hans K., Dipl.-Ing.

(57) **Abstract**

Upon executing a computer program for supporting project planning of a new model vehicle by a computer, information indicating feasibility of a new model vehicle that satisfies target specification and performance data, which are set by the operator, is calculated on the basis of specification information and performance information of a plurality of existing vehicles stored in a database, and the calculation result is provided to the operator. The calculation result contains information associated with the degree of achievement of the set target specification data and/or target performance, information associated with suggestions for improving feasibility of the new model vehicle, and the like, in addition to the information indicating the feasibility of the new model vehicle.

## Description

### FIELD OF THE INVENTION

The present invention relates to the field of user's job support using a computer.

### BACKGROUND OF THE INVENTION

Conventionally, upon mass-producing and retailing new products in manufacturers who produce industrial products in large quantities, a plurality of workers time-serially process jobs in collaboration with each other in a plurality of departments such as a planning department (planning step) of planning specifications of a new product on the basis of the market trend and the like, which have been researched in advance, a design department (design step) of designing the planned new product, a production engineering department (mass-production step of designing/organizing an assembly line so as to mass-produce the designed new product in practice, a production department (production step) of mass-producing new products in practice in the designed/organized assembly line, and the like.

Of such fields of industrial products to be produced in large quantities, in the field of automobiles, industrial robots, various assembly support devices, and the like have been introduced early on in the production department, so as to achieve both an improvement in work environment of workers and efficient productions.

Furthermore, according to rapid progress in arithmetic processing performance along with the development of computer technologies in recent years, the design department that undertakes the pre-process of the production engineering department utilizes a design support system that uses CAD (Computer aided Design)/CAE(Computer aided Engineering)/CAM (Computer aided Manufacturing) software, thus virtually simulating vehicle design, structural analysis, performance evaluation, and production equipment on a computer, and improving the efficiency of various jobs which were conventionally made by actually producing (physically present) mockups and prototypes a plurality of number of times.

Upon improving the job efficiency of the design department that exploits such design support system, since it becomes easy for a person in charge in the production engineering department to participate in product design from a tentative plan stage of design of a new model vehicle, the person in charge in the production engineering department can efficiently organize/build the production equipment using design information (three-dimensional (3D) CAD information and the like) with high accuracy, which have been elaborated using the design support system, in the mass-production step as the post-process.

In this manner, in the field of automobiles, so-called concurrent engineering of the design department (design step) and production engineering department (mass-production step) have been implemented at a relatively high level, thus executing efficient jobs.

In such current situation, a project book (specification) of a new model vehicle, which is planned in the planning department (planning step) that undertakes the pre-process describes a huge number of items such as various target performance items and specifications, cost, performance comparison items with a benchmark vehicle (vehicle to be compared), and the like of that new model vehicle in writing. For this reason, a person in charge of the planning department must spend many hours to describe the product concept of the assumed new model vehicle in the project book.

The top management (including so-called department directors and chiefs) of an enterprise that develops and retails automobiles determines on the basis of the project book of the new model vehicle proposed by the planning department if that new model vehicle is to be developed and retailed in practice as business. However, it is not easy even for experienced directors to read the gist of the product of the new model vehicle from such large amount of sheets.

On the other hand, the design department cannot often officially participate in mass-production design of the new model vehicle until the top management approves the project book (specification) of the new model vehicle in the planning department. For this reason, the design department starts practical design upon receiving the approved project book of the new model vehicle while giving that book of the status of an "absolute job instruction (master)".

However, the project book that the design department receives from the planning department often includes unbalance between expected cost and target performance, and specifications that conflict with the feasibility of a vehicle layout or target performance so as to improve the product value in the market of new model vehicles.

Or even when designs of respective parts in the design department are complete with difficulty, the planning and design departments are required for a practical and drastic review of a layout around interfering parts, if such interference is found in an unexpected place in a prototype production process in which a test production department also participates. Hence, a long time is required until a final prototype vehicle is produced.

In such cases, not only the market release timing of the new model vehicle delays, but the product value of the new model vehicle deviates from the concept that the planning department originally aims at (i.e., the product value of the new model vehicle as a whole).

To avoid such problem, a comprehensive concurrent engineering environment among all departments which are engaged in development of the new model vehicle may be realized together with the existing concurrent engineering between the design department and the production engineering department by preparing for an environment that allows concurrent engineering between the planning department and the design department. However, it is not always preferable in terms of the nature of an automobile as a product that the design department which must design a practical vehicle with high cost performance participates in jobs of the planning department which must form the product value of a new model vehicle.

Therefore, in consideration of the aforementioned current situation, the planning department must fix up a high-quality finished product book (project information), which is feasible by respective departments of the post-process without mentioning high product value, within the shortest possible duration upon planning the new model vehicle.

If each person in charge of the planning department has sufficient business knowledge about respective departments of the post-process, it is possible to avoid planning of a project book that contain impossible specifications, conflicting specifications, and the like. However, it is not practical to think that all persons in charge of the planning department can freely use business knowledge about all departments. However, since a vehicle manufacturer already has a staggering volume of information generated upon design and mass-production of existing vehicles, and these kinds of information contain know-how about vehicle production in respective departments, they must be effectively used in planning, design, and the like of a new model vehicle.

### SUMMARY OF THE INVENTION

The present invention has been proposed to solve the conventional problems, and has as its object to provide a computer program, and apparatus and method for supporting project planning of a new model vehicle, which allow the user to easily recognize whether or not a new model vehicle to be planned is feasible.

In order to achieve the above object, a computer program for supporting project planning of a new model vehicle according to the present invention is characterized by the following arrangement.

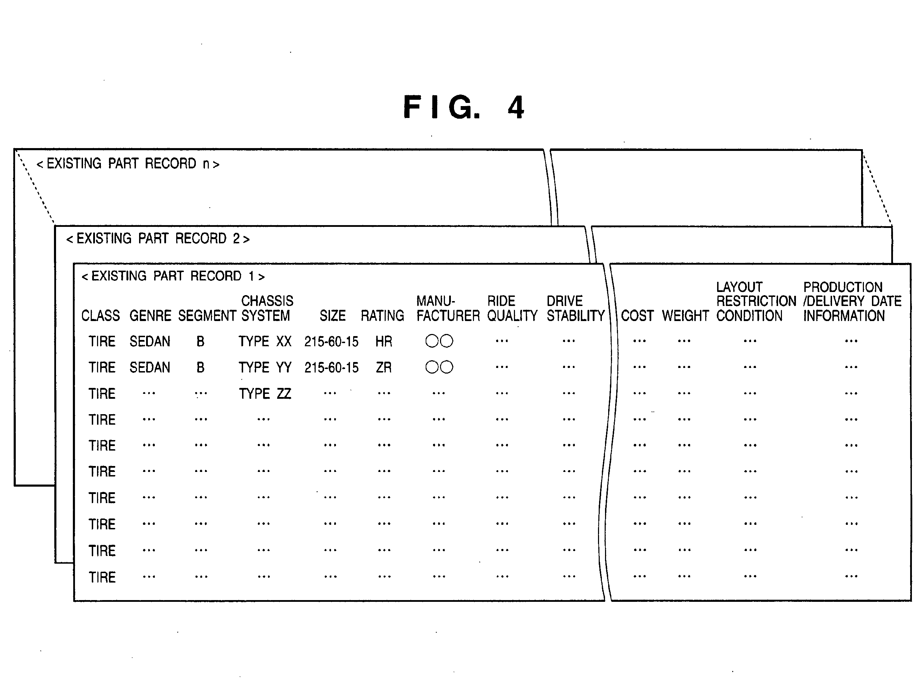

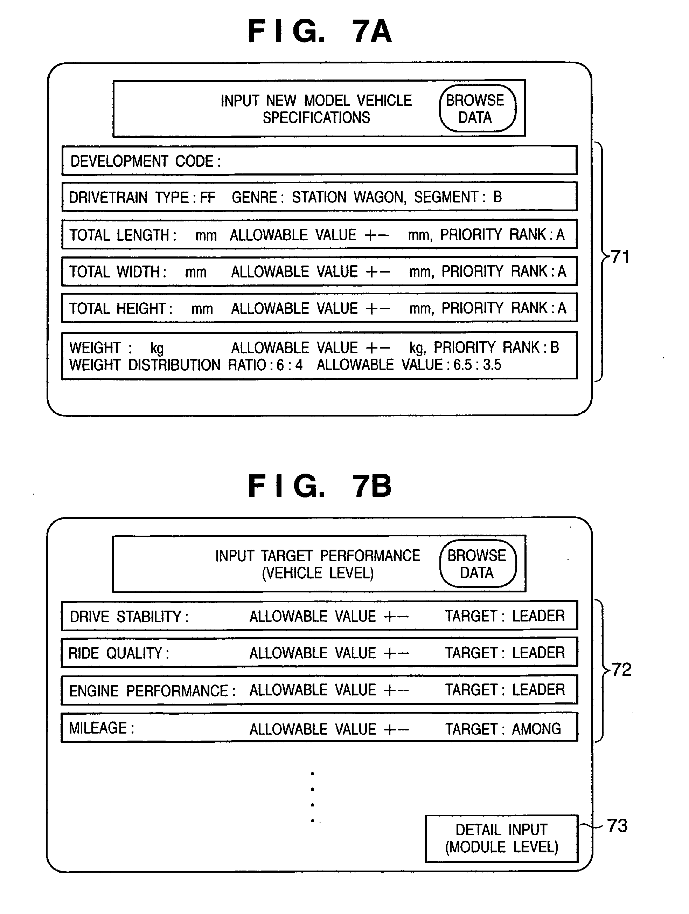

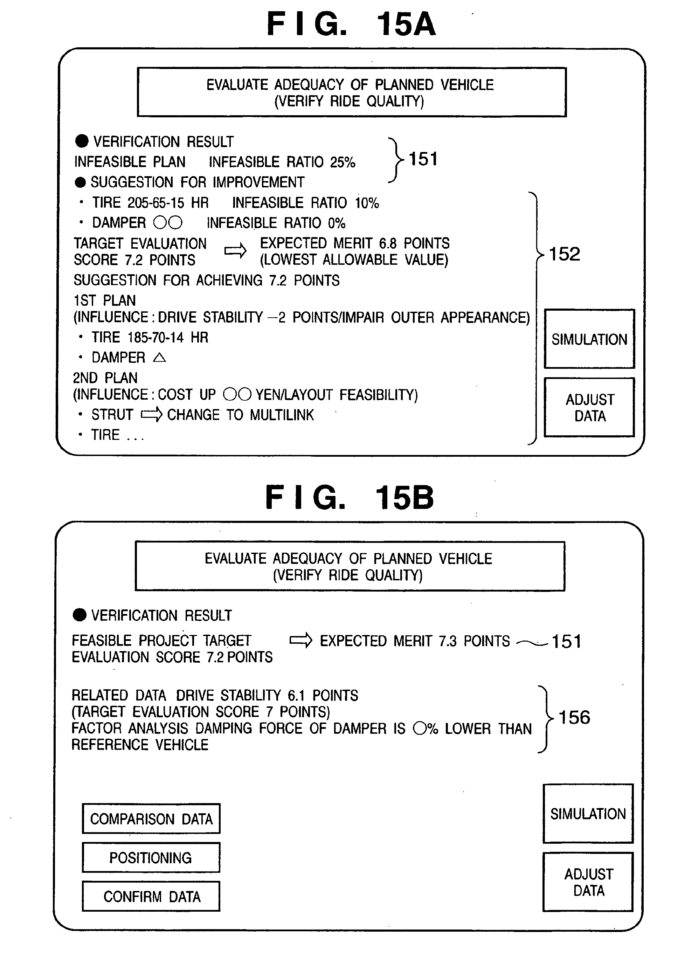

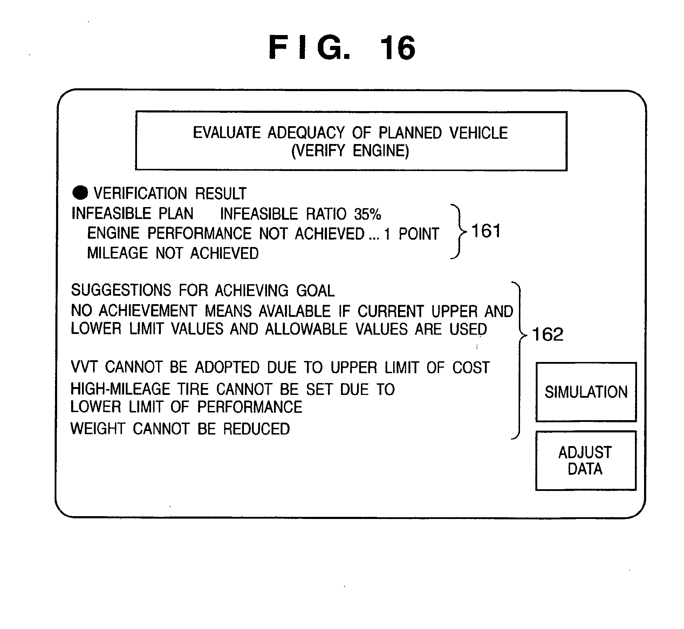

That is, a computer program for supporting project planning of a new model vehicle is characterized by making operation instructions that make a computer implement:
an information storage function of storing specification information and performance information of a plurality of existing vehicles in a database (3, Fig. 4);
an input function (region 71 in Fig. 7A, region 72 in Fig. 7B) of allowing a user to input target specification and performance data (e.g., at least one of performance items such as mileage engine performance, drive stability, and ride quality of a new model vehicle) of a new model vehicle to be planned in the computer; and
an information providing function (region 151 in Fig. 15A, region 155 in Fig. 15B, region 161 in Fig. 16) of calculating information indicating feasibility of a new model vehicle that satisfies the target specification and performance data input by the input function on the basis of information of respective items stored in the database, and providing the calculation result to the user, so as to support project planning by the user.

Or a computer program having another arrangement for supporting project planning of a new model vehicle is characterized by making operation instructions that make a computer implement:
an information storage function of storing specification information and performance information of a plurality of existing vehicles in a database (3, Fig. 4);
an input function (region 71 in Fig. 7A, region 72 in Fig. 7B) of allowing a user to input target specification and performance data of a new model vehicle to be planned in a server computer (1); and
an information providing function (Figs. 15A, 15B, and 16) of calculating, based on information of respective items stored in the database, whether or not the new model vehicle that satisfies the target specification data and/or target performance data within an allowable range, which is set for the target specification data and/or target performance data input by the input function, is feasible, and providing the calculation result to the user, so as to support project planning by the user.

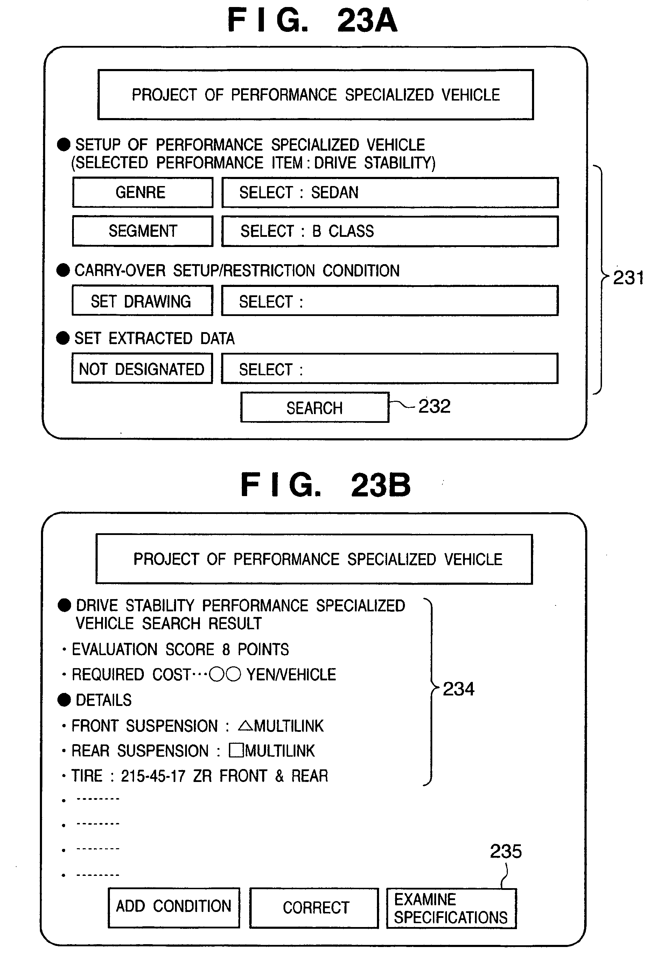

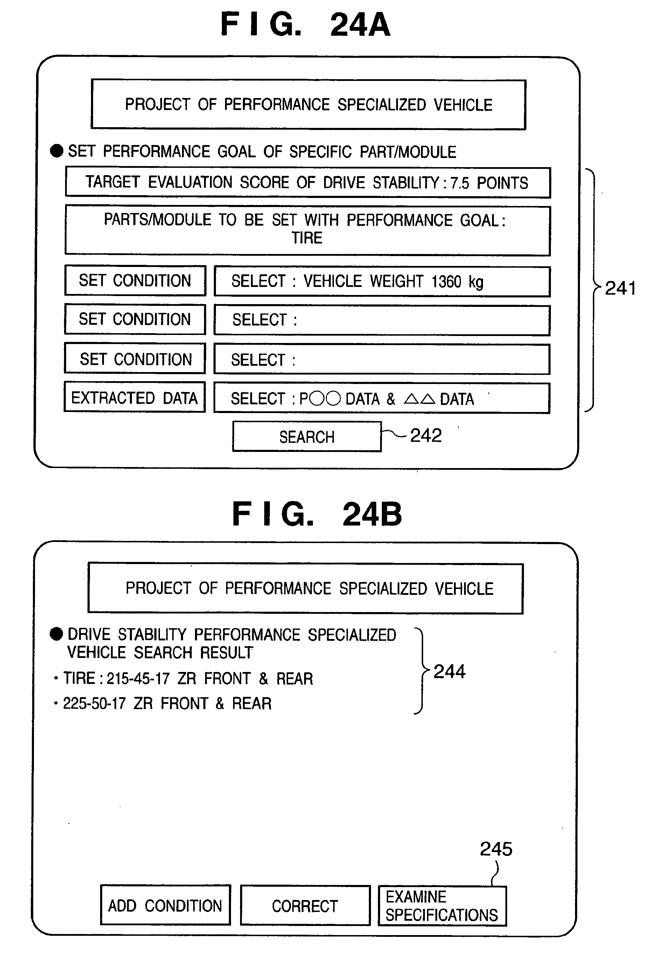

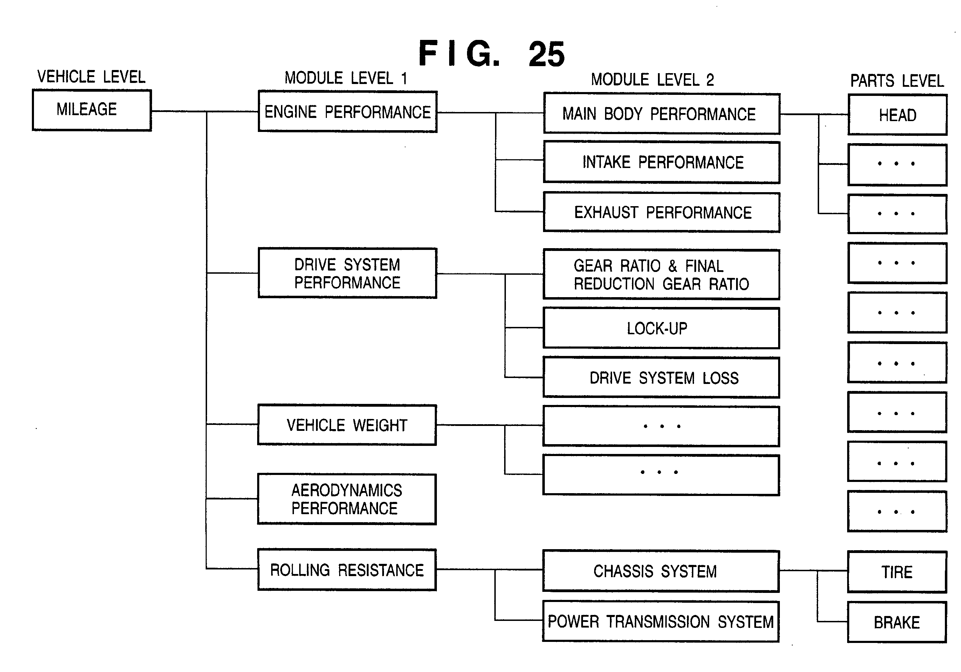

Or a computer program having still another arrangement for supporting project planning of a new model vehicle is characterized by making operation instructions that make a computer implement:
an information storage function of storing specification information and performance information of a plurality of existing modules which form each of a plurality of existing vehicles, and specification information and performance information of a plurality of parts which form each existing module in association with each other in a database (3, Fig. 4);
an input function (region 71 in Fig. 7A, region 72 in Fig. 7B) of allowing a user to input, to a server computer (1), target performance data (e.g., mileage, drive stability, ride quality, and the like) of a plurality of items to be achieved by a new model vehicle to be planned as a whole; and
an information notifying function (button 235 in Fig. 23B, button 245 in Fig. 24B) of calculating information indicating feasibility of a new model vehicle, which satisfies the target performance data of the plurality of items input by the input function, on the basis of information of respective items stored in the database, and notifying the user of the calculation result, so that at least one performance element required to achieve one of the target performance data of the plurality of items, which are to be achieved by the new model vehicle as a whole, specification information and performance information of at least one existing module required to satisfy the performance element, and specification information and performance information of a plurality of existing parts which form that existing module can be hierarchically displayed for each performance item (Fig. 25), so as to support project planning of the new model vehicle.

Or a computer program having still another arrangement for supporting project planning of a new model vehicle is characterized by making operation instructions that make a computer implement:
an information storage function of storing specification information and performance information of a plurality of existing vehicles in a database (3, Fig. 4);
an input function (region 71 in Fig. 7A, region 72 in Fig. 7B) of allowing a user to input target specification and performance data of a new model vehicle to be planned in a server computer (1); and
an information providing function (region 152 in Fig. 15A, region 156 in Fig. 15B, region 162 in Fig. 16) of calculating information associated with a vehicle configuration required to realize a new model vehicle that satisfies the target specification and performance data input by the input function as a practical vehicle on the basis of information of respective items stored in the database, and providing the calculation result to the user, so as to support project planning by the user.

Note that the above object is also achieved by a computer (information processing apparatus) that executes the computer program which make the operation instructions having each of the above arrangements, or a computer-readable storage medium that stores such computer program.

Also, the above object is achieved by an apparatus or method for supporting project planning of a new model vehicle, which corresponds to a computer (information processing apparatus) that executes the computer program which make the operation instructions having each of the above arrangements.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing an example of the arrangement of a computer network to which a new model vehicle project planning support system according to an embodiment of the present invention can be applied;
Fig. 2 is a schematic chart showing a job flow from a planning job until a production engineering job of a new model vehicle in the embodiment of the present invention;
Fig. 3 is a schematic view showing various kinds of information stored in a database 3 in the embodiment of the present invention;
Fig. 4 shows an example of the data format of each individual record stored in the database 3 in the embodiment of the present invention;
Fig. 5A shows a main menu window of the new model vehicle project planning support system in the embodiment of the present invention;
Fig. 5B shows a menu window when a button 51 has been selected on the main menu window (Fig. 5A) of the new model vehicle project planning support system in the embodiment of the present invention;
Figs. 6A and 6B show input windows used to set upper and lower limits of restriction upon verifying project information of a new model vehicle;
Figs. 7A and 7B show a window (Fig. 7A) used to set various target specifications and a window (Fig. 7B) used to set various target performance items, which are to be realized on the vehicle level in a planning process of a new model vehicle on the basis of the target performance and specifications;
Figs. 8A and 8B show windows used to set various target specifications to be realized on the module level in the planning process of a new model vehicle on the basis of the target performance and specifications;
Fig. 9 shows a setup window used to set a carry-over part or module;
Fig. 10 shows an example of a 3D model display window, which is displayed upon setting a carry-over part or module;
Fig. 11 shows an example of a 3D model display window, which is displayed upon setting a carry-over part or module;
Fig. 12 shows a menu window used to execute various kinds of verification in the planning process of a new model vehicle on the basis of the target performance and specifications;
Figs. 13A and 13B shows a comparison display example of verification results in the planning process of a new model vehicle on the basis of the target performance and specifications;
Figs. 14A and 14B show menu windows used to evaluate adequacy of the verification results in the planning process of a new model vehicle on the basis of the target performance and specifications;
Figs. 15A and 15B show display examples of the adequacy evaluation results in the planning process of a new model vehicle on the basis of the target performance and specifications;
Fig. 16 shows a display example of the adequacy evaluation result in the planning process of a new model vehicle on the basis of the target performance and specifications;
Fig. 17 shows an example of a layout verification window in the planning process of a new model vehicle on the basis of the target performance and specifications;
Figs. 18A and 18B show an example of menu windows used to set a plurality of different verification conditions for project verification in the planning process of a new model vehicle or performance specialized vehicle on the basis of the target performance and specifications;
Figs. 19A and 19B show an example of windows used to set associated items of the plurality of different verification conditions;
Figs. 20A and 20B show an example of windows used to set priority of the plurality of different verification conditions;
Fig. 21 shows an example of an evaluation index setup window;
Figs. 22A and 22B show menu windows in the planning process of a performance specialized vehicle;
Figs. 23A and 23B show an example of a setup window (Fig. 23A) used to make a search by approach 1 and a display window (Fig. 23B) of the search result in the planning process of a performance specialized vehicle;
Figs. 24A and 24B show an example of a setup window (Fig. 24A) used to make a search by approach 2 and a display window (Fig. 24B) of the search result in the planning process of a performance specialized vehicle;
Fig. 25 shows an example of a tree structure, which is displayed to examine/edit the search result calculated by a server computer 1 for performance items of operator's choice;
Fig. 26 is a flow chart showing an outline of a new model vehicle project planning support process executed by the server computer 1 in the embodiment of the present invention;
Fig. 27 is a flow chart showing details of a new model vehicle planning process (step S3) based on the target performance and specifications of the new model vehicle project planning support process executed by the server computer 1 in the embodiment of the present invention; and
Fig. 28 is a flow chart showing details of a performance specialized vehicle planning process (step S4) based on the target performance and specifications of the new model vehicle project planning support process executed by the server computer 1 in the embodiment of the present invention.

### DETAILED DESCRIPTION OF THE PREFERRED EMBODIMENTS

Preferred embodiments of the present invention will now be described in detail in accordance with the accompanying drawings. The overall arrangement of a computer network to which the present invention can be applied will be explained first.

### [System Arrangement]

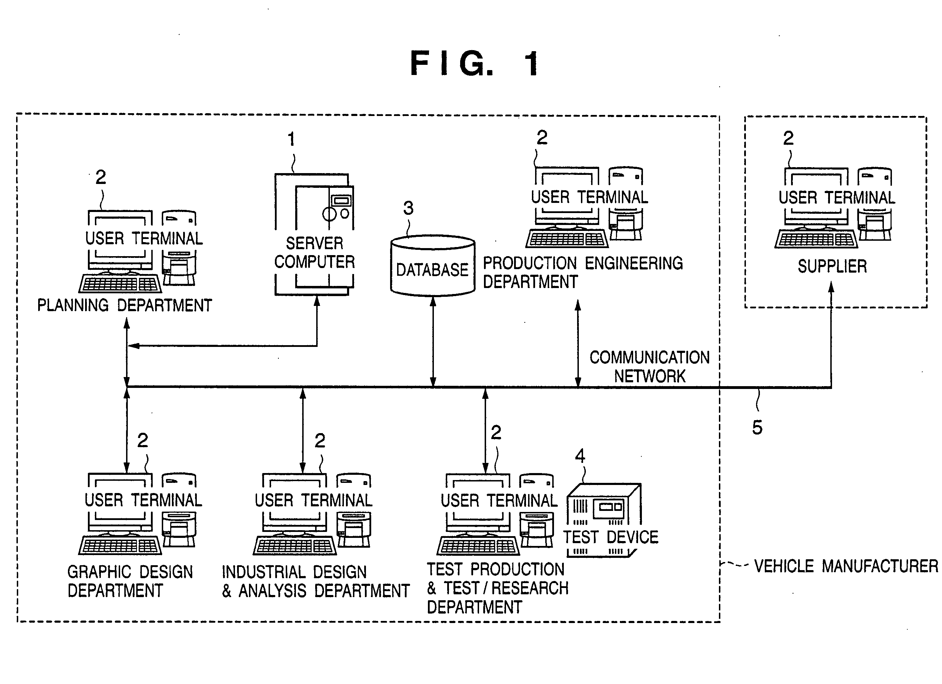

Fig. 1 shows an example of the arrangement of a computer network to which a new model vehicle project planning support system of this embodiment can be applied.

Referring to Fig. 1, for example, a vehicle manufacturer is roughly categorized into a planning department, graphic design department, industrial design & analysis department, production engineering department, and test/research department (note that a production department that assembles vehicles in practice is not a characteristic one in this embodiment, and is omitted).

Principal jobs of the respective departments in this embodiment will be briefly explained below.
- Planning department: A person in charge of the planning department plans detailed specifications of a new model vehicle on the basis of the market trend and the like, which have been researched in advance, examines adequacy (feasibility) of the project, and then proposes that project plan to the top management of the vehicle manufacturer.
- Graphic design department: Upon roughly determining the concept, performance, and layout of the new model vehicle planned by the planning department, a person in charge of the graphic design department designs the shape of the new model vehicle corresponding to that concept.
- Industrial design department: A person in charge of the industrial design department practically designs a new model vehicle (mass-production design) using work support software programs such as CAD/CAE/CAM and the like on the basis of a project book (digital project information in this embodiment) of the new model vehicle approved by the top management.
- Analysis department: A person in charge of the analysis department virtually analyzes design information of the new model vehicle designed in the industrial design department using various simulation software programs so as to verify the performance, structure, and the like of the target new model vehicle.
- Test production department: A person in charge of the test production department produces a prototype vehicle in accordance with the design information designed in the industrial design department.
- Test/research department: A person in charge of the test/research department conducts various tests for the prototype vehicle produced in the test production department using a test device 4 and the like.
- Production engineering department: A person in charge of this department organizes an assembly line, and designs and forms production equipment so as to mass-produce a new model vehicle designed in the industrial design department in practice.

Note that a supplier supplies various parts and modules (units) to the vehicle manufacturer.

User terminals 2 such as personal computers and the like are equipped in the aforementioned departments. The individual user terminals 2 can exchange information via a communication network 5, to which a user terminal 2 equipped in an external supplier (that of parts and the like) is connected.

A database 3 stores various kinds of information that pertain to existing vehicles, and the user terminals 2 of the respective department can access the database 3 via the communication network 5 (details will be described later).

A server computer 1 is placed under the control of, e.g., the planning department, and supports project planning of a new model vehicle by the operator (person in charge of the planning department) with reference to various kinds of information stored in the database 3 in accordance with the operation at the user terminal 2 of the planning department (details will be described later).

Note that the arrangement of each individual device which implements the system arrangement exemplified in Fig. 1, and its communication sequence itself are known to those who are skilled in the art, and a detailed description thereof in this embodiment will be omitted.

### [Job Flow]

A characteristic job flow implemented in this embodiment using the aforementioned system arrangement will be explained below.

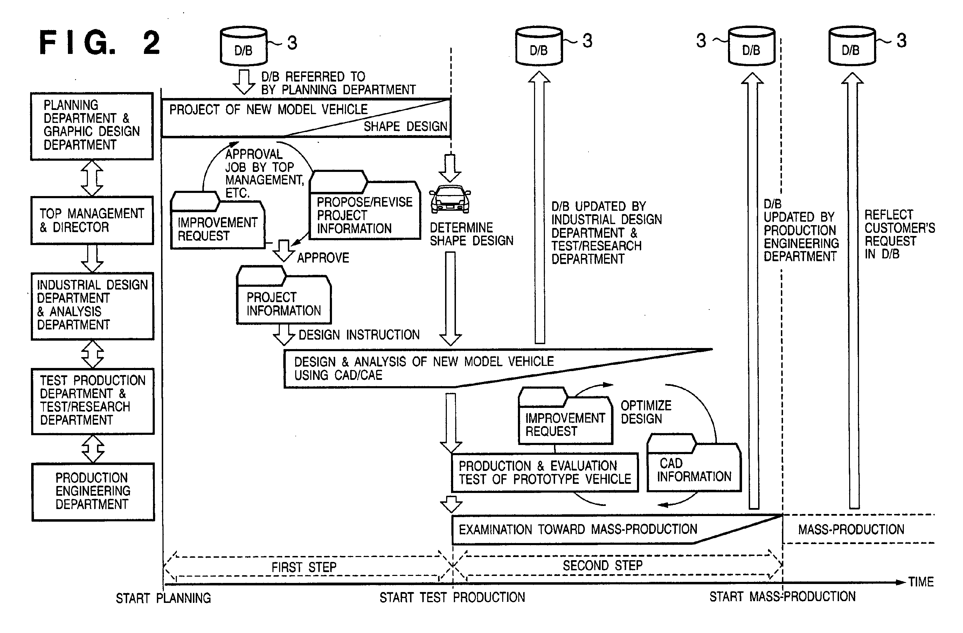

Fig. 2 schematically shows the job flow from a planning job to a production engineering job of a new model vehicle in this embodiment. In this embodiment, jobs in the respective departments from when planning of a new model vehicle begins until mass-production starts via production of a prototype vehicle and vehicle evaluation tests are roughly classified into "first step" and "second step", as shown in Fig. 2.

### <First Step>

In the first step, the person in charge of the planning department plans detailed specifications of a new model vehicle to be planned and verifies adequacy (feasibility) of the project with reference to information that pertains to a plurality of kinds of existing vehicles stored in the database 3 by exploiting the project planning support process by the server computer 1 in accordance with a product concept of the new model vehicle formed based on the market trend and the like, which have been researched in advance. An adequacy verification job is recursively repeated in the planning department while adjusting setup items until it is determined in the verification result of the server computer 1 that the project is feasible (details will be explained later).

When the concept, performance, and layout of the new model vehicle planned in the planning department are roughly fixed up, the person in charge of the graphic design department starts 3D graphic design of the new model vehicle corresponding to the concept using the user terminal 2.

The project information (data file group of digital information) of the new model vehicle, whose feasibility has been verified by the planning department, is proposed to the top management of the vehicle manufacturer.

The top management (including so-called department directors and chiefs) of the vehicle manufacturer comprehensively determines in terms of the product value, schedule, estimated cost, equipment, and the like if the new model vehicle is to be produced and retailed in practice, with reference to the project information of the new model vehicle proposed by the planning department and also various kinds of information stored in the database 3, as needed. Upon determination, the top management issues some improvement requests to the planning department as needed. In such case, the planning department revises the project information based on such improvement requests, and proposes the revised project information to the top management again.

The project information of the new model vehicle, which has been approved via such approval job is located as "absolute job instruction (master)", and is officially distributed to the respective departments such as the industrial design department, analysis department, and the like that undertake the post-processes of the planning department.

The person in charge of the industrial design department starts practical design (mass-production design) of the new model vehicle on the basis of the project information received as a design instruction using work support software programs such as CAD/CAE/CAM and the like. Since the project information contains or is associated with information pertaining to existing vehicles already stored in the database, the industrial design department can achieve detailed design of, e.g., a solid model which represents the 3D shape of the new model vehicle in minimum required processes.

When the mass-production design in the industrial design department has progressed to some extent, the person in charge of the analysis department virtually analyzes the performance, structure, and the like of the new model vehicle to be analyzed using various simulation software programs, and improves the accuracy of the mass-production design information.

The shape design of the new model vehicle generated in the graphic design department is approved via an approval job of the top management of the vehicle manufacturer independently of the project information of the new model vehicle, and shape information that represents the approved shape design is then officially distributed to the respective departments such as the test production department and the like that undertake the post-processes of the graphic design department.

### <Second Step>

In the second step, when the mass-production design in the industrial design department is roughly fixed up, the person in charge of the test production department produces a prototype vehicle using the design information (3D CAD information and the like) of the new model vehicle designed in the industrial design department. The produced prototype vehicle undergoes various evaluation tests by the person in charge of the test/research department to collect test results. The test results of the evaluation tests of the prototype vehicle are reflected in the design information of a mass-production vehicle by the industrial design department.

When the mass-production design in the industrial design department is roughly fixed up, the person in charge of the production engineering department begins to simulate the workability, work capacity, and work organization in an assembly line using work support software programs such as CAD/CAE/CAM and the like in accordance with the design information (3D CAD information) of the new model vehicle designed in the industrial design department.

At this time, since the industrial design & analysis department, production engineering department, and test production & test/research department conduct jobs using various work support software programs and simulation software programs, even when the design information, which is passed from the industrial design department to the post-process (production engineering department) at first, is tentative information that has not undergone any configuration operation of dimensional design and the like of details, the departments of the post-processes can start examination of their jobs, and can issue improvement requests to the industrial design department as needed. Upon receiving the improvement requests, the industrial design department revises the design information based on the improvement requests, and passes the revised design information to the respective departments of the post-processes again.

In this embodiment, the project information provided from the planning department is information with high accuracy based on various kinds of information that pertain to existing vehicles stored in the database 3 (details will be explained later). For this reason, in the second step, the mass-production design is optimized by collaboration of the industrial design & analysis department, production engineering department, and test production & test/research department, as schematically shown in Fig. 2, but the project information previously generated in the planning department (first step) is never changed practically.

The design information (3D CAD information of a solid model and the like) of the new model vehicle optimized in the second step is handled as a product model for mass-production, and the post-process (production step: not shown in Fig. 2) starts actual mass-production in accordance with this final design information.

Note that a practical means which implements collaboration in the second step adopts a general design engineering scheme and simulation technique, and a detailed description thereof in this embodiment will be omitted.

In the second step, the industrial design department, analysis department, test production & test/research department, and production engineering department register various kinds of information such as the mass-production design information, various analysis results, vehicle evaluation test results, and the like of the new model vehicle in the database 3, thus updating the contents of the database 3 by the practical latest information. Furthermore, various kinds of information such as the dates of delivery, production lots, cost (amount), and the like of parts or modules to be supplied to the vehicle manufacturer are registered in the database 3 from the user terminal 2 equipped in the external supplier.

### [Database 3]

Information pertaining to a plurality of existing vehicles stored in the database 3 will be explained in detail below.

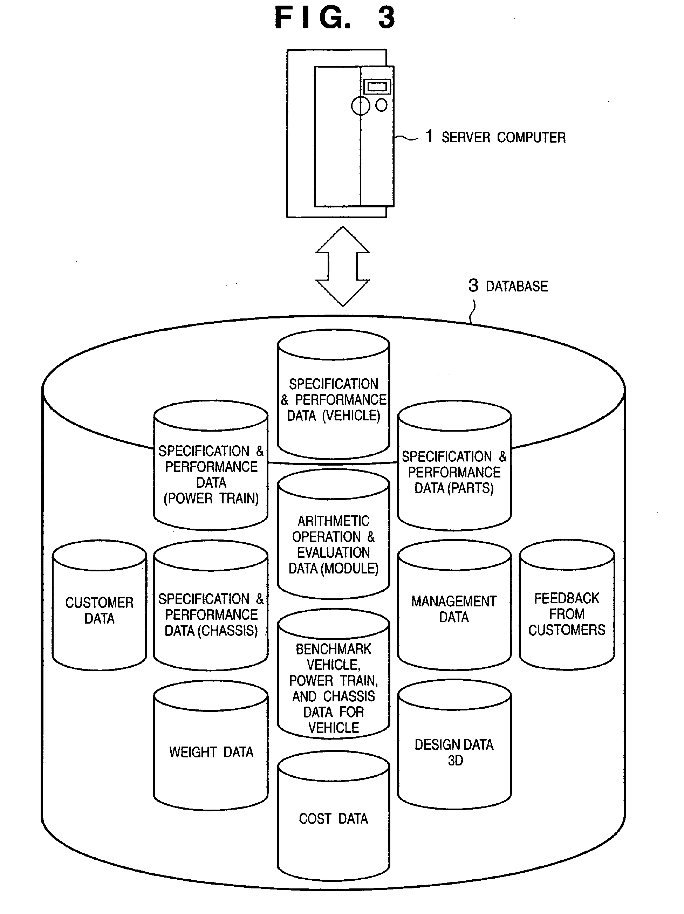

Fig. 3 schematically exemplifies various kinds of information stored in the database 3 in this embodiment.

As shown in Fig. 3, the database 3 stores, in association with each other, various kinds of information (records):
- specification information and performance information on the vehicle level in association with a plurality of types of existing vehicles;
- specification information and performance information of a plurality of types of module levels (e.g., power train module, chassis, and the like) which form each individual existing vehicle;
- specification information and performance information of a plurality of types of parts levels which form each individual existing module;
- cost information of the existing vehicles, existing modules, and existing parts;
- 3D design information (3D CAD information such as solid models which contain 3D shapes and their dimensional information, various kinds of attribute information, and the like) of the existing vehicles, existing modules, and existing parts;
- information associated with customers who purchased the existing vehicles;
- devaluation information such as advice, complaint, and the like from the customers who purchased the existing vehicles;
- specification information and performance information that pertain to benchmark vehicles (vehicles to be compared) as existing vehicles retailed by other vehicle manufacturers; and the like.
   Such various kinds of information are systematically managed in three layers of categories, i.e., vehicle, module, and parts levels, so as to achieve efficient and easy reference (re-use). Note that the specification information is numerical value information that represents the dimensions, performance, and the like.

The database 3 that stores various kinds of items of information can adopt a general relational database (RDB) described in, e.g., SQL (Structured Query Language) or the like.

In this embodiment, various kinds of information that pertain to vehicles, which are stored in the database 3, are registered by the industrial design department, analysis department, test production & test/research department, production engineering department, and external supplier upon developing those vehicles, as has been explained with reference to Fig. 2, and information that pertains to the customers and evaluation information from the customers are registered by retailers and users. More specifically, information set at the user terminal 2 equipped in each department or supplier is stored in the database 3 via the communication network 5. The database 3 is under the control of, e.g., the server computer 1, and the storage operation of externally received information is controlled by the server computer 1 in such case.

Fig. 4 exemplifies the data format of each individual record stored in the database 3 in this embodiment, i.e., exemplifies information of the parts level as a minimum unit of the three category layers, i.e., the vehicle, module, and parts levels.

More specifically, Fig. 4 shows, as records of a plurality of types of tires, which have already been or can be adopted in the plurality of types of existing vehicles of those associated with the existing parts, "genre" and "segment", "chassis system", "layout restriction condition", and "production & delivery date information" of a vehicle which adopts that tire, "size" and "rating" as specification information, and evaluation scores of "ride quality" and "drive stability" as performance information.

Note that "genre" represents the purpose and drive performance of a vehicle, and this embodiment has categories of sedan, wagon, coupe, and the like. "Segment" represents a vehicle class including the vehicle size and engine displacement (including the output of an electric motor in case of a vehicle using the motor), and is expressed by a symbol such as A, B, C, or the like in this embodiment.

"Layout restriction condition" is information indicating the restriction condition on the layout place upon laying out the existing parts in a layout examination process (to be described later). "Production & delivery date information" is information indicating the production lot, delivery date, and the like of the existing parts.

Of the respective information items about tires shown in Fig. 4, "genre" and "segment" are information indicating associated items on the vehicle level with existing vehicles that adopt target tires. "Chassis system" is information indicating associated items on the module level with existing modules which adopt target tires, and types XX, YY,... are their identification information. Note that information that indicates associated items on the vehicle level may use the vehicle type that specifies each individual existing vehicle solely or together.

Therefore, upon referring to the database 3 on the module level, records of a plurality of types of existing parts which form a given existing module are extracted using identification information (type or the like) which specifies that existing module as a search key. On the other hand, upon referring to the database 3 on the vehicle level, records of a plurality of types of existing modules which form a given existing vehicle, and those of a plurality of types of existing parts associated with these existing modules are extracted using identification information (genre and segment, or vehicle type) which specifies that existing vehicle as a search key.

In this embodiment, an evaluation unit of performance information is categorized into three layers, i.e., a vehicle level (whole vehicle), module levels which form the vehicle, and parts levels which form one module, in correspondence with the three layers of the management system of the database 3. The performance information of each of various items which belong to these levels pre-store a standardized evaluation score (evaluation value) in a common scale, and such score is expressed on a most frequently used scale of one to ten in this embodiment. In this embodiment, the database 3 stores a huge volume of information generated upon design, analysis, vehicle evaluation tests, and production of a plurality of types of existing vehicles using the aforementioned system, and know-how for vehicle production in the respective departments, which is physically or morally contained in such information, is effectively used in the project planning process of the new model vehicle.

Upon supporting planning of a new model vehicle, the server computer 1 can access the database 3 in accordance with a software program pre-stored in a memory. The operator (user) of the user terminal 2 equipped in each department (including supplier) can maintain the contents of the database 3, i.e., can add, update, or delete information stored in the database 3 within a predetermined allowable range.

### [Project Planning Support Process of New Model Vehicle]

The project planning support process used by the person in charge of the planning department upon planning a new model vehicle will be described in detail below. This support process is implemented with reference to the database 3 when a CPU (not shown) of the server computer 1 executes a program pre-stored in a storage medium (hard disk device or the like) in accordance with operator's operations at the user terminal 2.

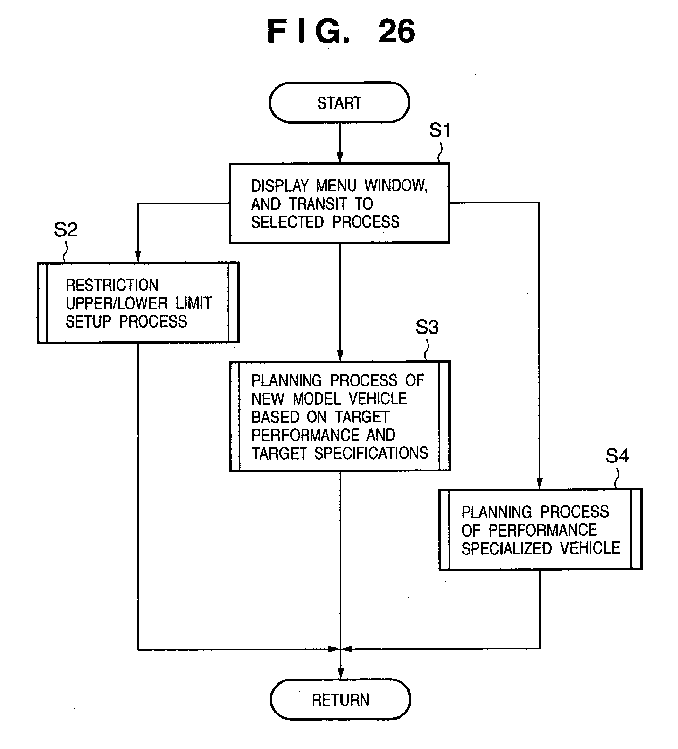

Fig. 26 is a flow chart showing an outline of the project planning support process of a new model vehicle executed by the server computer 1 in this embodiment. This process starts when the person in charge, who has predetermined identification information (ID), of the planning department logs on the user terminal 2.

In the following description, functions of the server computer 1, i.e., a function of displaying various windows having predetermined input items on a display of the user terminal 2, a function of acquiring information set in each input item on the displayed window from the user terminal 2, a function of searching the database 3 for required information using a predetermined search key, and the like, adopt general sequences, and a detailed description thereof in this embodiment will be omitted.

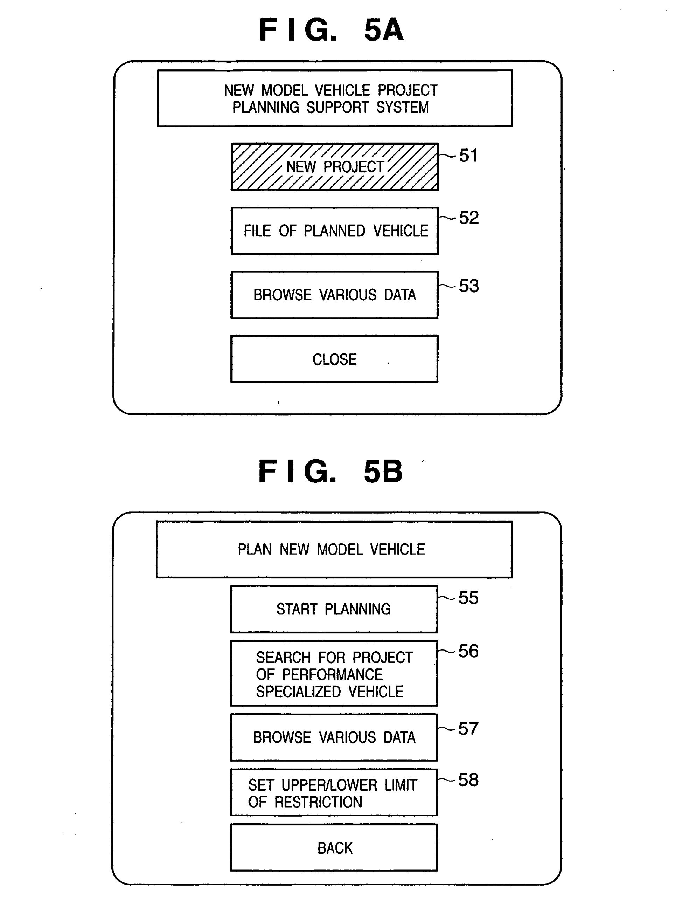

Step S1 (Fig. 26): A menu window shown in Fig. 5A is displayed on the display of the user terminal 2, and if the operator selects a software button (to be simply referred to as a button hereinafter) 53 "browse various data" on this menu window, various kinds of information stored in the database 3 can be referred to at the user terminal 2 on which the operator has logged (to be simply referred to as the user terminal 2 hereinafter).

If the operator selects a button 51 "new project" on the menu window shown in Fig. 5A, a menu window shown in Fig. 5B is displayed; if the operator selects a button 52 "file of planned vehicle", the project information of the new model vehicle, which has already been stored in the server computer 1, can be selected. If the information is selected, the menu window shown in Fig. 5B is displayed.

If the operator selects a button 55 "start planning" on the menu window shown in Fig. 5B, the flow advances to step S3 (to be described later); if the operator selects a button 56 "search for project of performance specialized vehicle", the flow advances to step S4; and if the operator selects a button 58 "set upper and lower limits of restriction", the flow advances to step S2 (to be described later). On this menu window as well, if the operator selects a button 57 "browse various data", various kinds of information stored in the database 3 can be referred to at the user terminal 2.

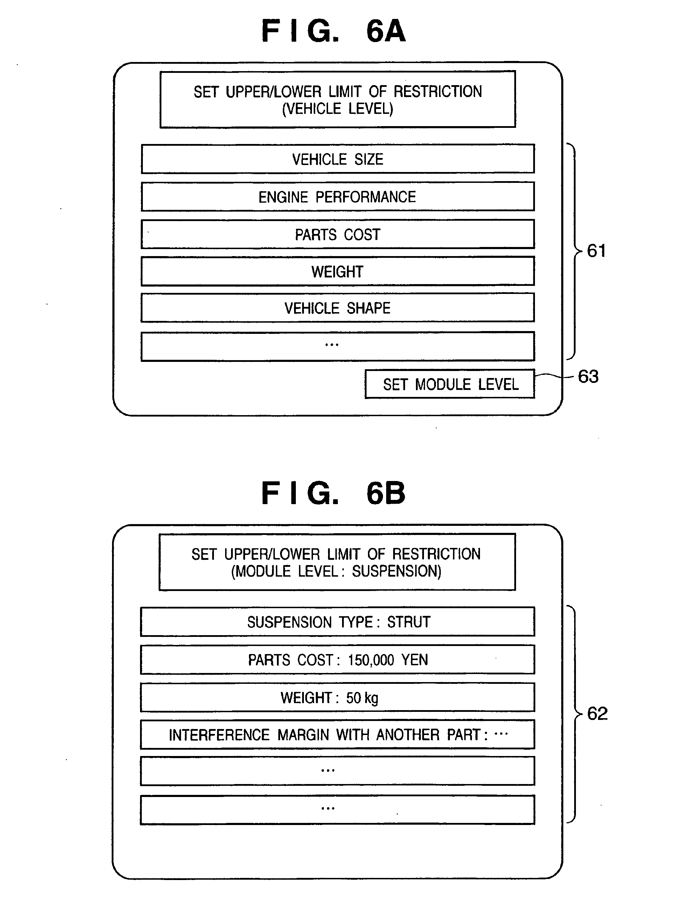

Step S2: If the operator selects the button 58 "set upper and lower limits of restriction" on the menu window shown in Fig. 5B, a restriction upper/lower limit setup process is launched, and this process displays a menu window shown in Fig. 6A.

On the displayed menu window, the operator of the user terminal 2 sets indispensable conditions that the new model vehicle must satisfy upon planning the project of the new model vehicle.

A region 61 on the menu window shown in Fig. 6A displays items such as a vehicle size, engine performance, parts cost (accumulated value), weight, vehicle shape, and the like as indispensable condition of the new model vehicle to be planned on the vehicle level. The operator selects one of these items corresponding to indispensable conditions to be set to unfold a sub-window (not shown) used to set a condition for that item, and sets the corresponding indispensable condition.

When the operator wants to set not only indispensable conditions of the new model vehicle on the vehicle level but also those on module levels which form that new model vehicle, he or she selects a button 63 "module level setup" on the menu window shown in Fig. 6A to display a menu window shown in Fig. 6B. A region 62 shown in Fig. 6B displays a state wherein the operator sets the parts cost, weight, interference margin with other parts, and the like of a suspension as an example of a module.

Upon starting at least new project planning of a new model vehicle, the operator of the user terminal 2 must set indispensable conditions for a new model vehicle to be planned in step S2 before he or she starts project planning in a planning process in step S3 or S4 in practice.

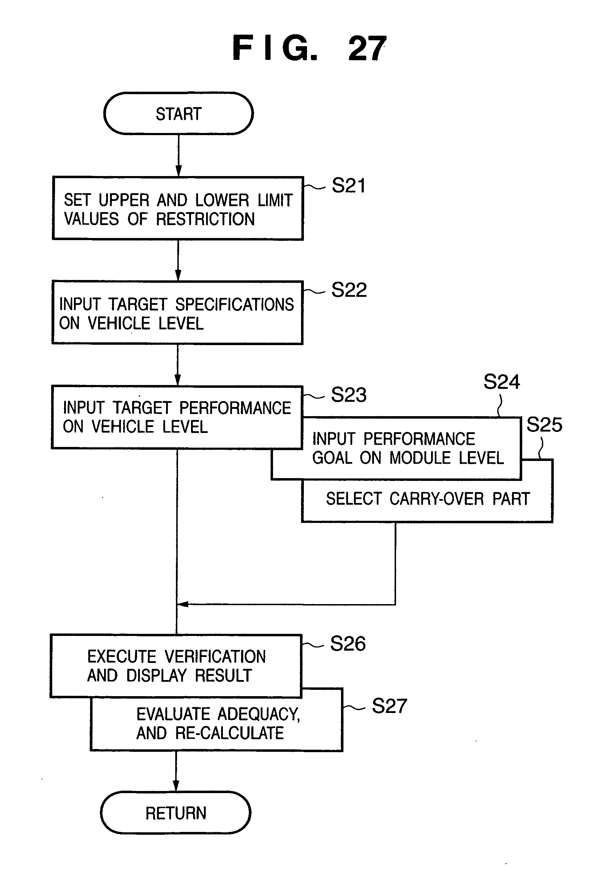

Step S3: In a planning process of a new model vehicle based on target performance and specifications, a project (specifications) of a new model vehicle which satisfies target performance and specifications is planned with reference to information pertaining to existing vehicles stored in the database 3 on the basis of the target performance and specifications associated with the new model vehicle to be planned, which are set by the operator via the user terminal 2 (details will be described later with reference to Fig. 27). The operator of the user terminal 2 makes the server computer 1 repeat the planning process while adjusting input information as needed, until the project of a new model vehicle, which matches the product concept planned in advance, is obtained.

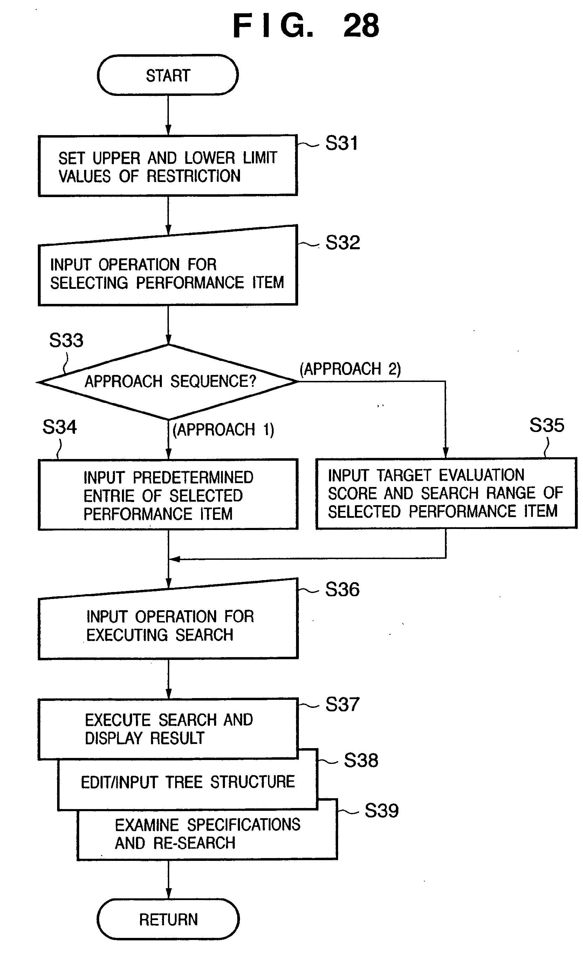

Step S4: In a planning process of a performance specialized vehicle, a project (specifications) of a whole vehicle that realizes a performance specialized vehicle, which satisfies desired target performance set by the operator for a given one of a plurality of performance items, is planned (details will be explained later with reference to Fig. 28). The operator of the user terminal 2 makes the server computer 1 repeat the planning process while adjusting input information as needed, until the project of a performance specialized vehicle, which matches the product concept planned in advance, is obtained.

In this manner, the project planning support process shown in Fig. 26 is roughly configured by three types of processes, i.e., the restriction upper/lower limit setup process (step S2), the new model vehicle planning process based on target performance and specifications (step S3), and the performance specialized vehicle planning process (step S4), and the operator can repeat a desired process while appropriately changing setups.

The processes in steps S3 and S4, which have been reviewed above, will be described in detail below.

### <New Model Vehicle Planning Process based on Target Performance and Specifications>

The new model vehicle planning process based on target performance and specifications will be described below with reference to Figs. 7A and 7B to Fig. 21, and Fig. 27.

Fig. 27 is a flow chart showing details of the new model vehicle planning process based on target performance and specifications (step S3) in the project planning support process of a new model vehicle executed by the server computer 1 in this embodiment.

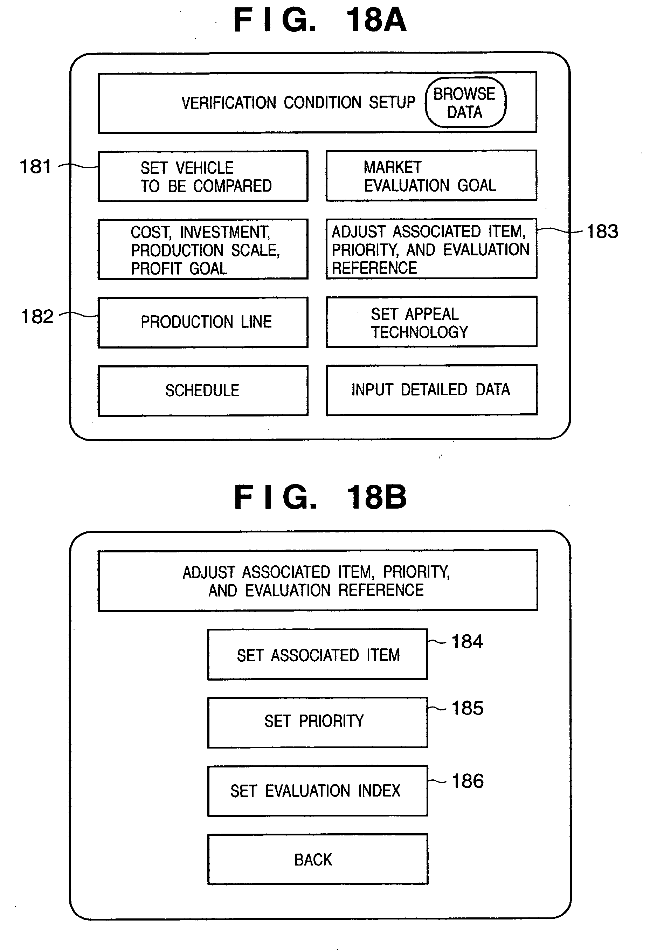

Step S21 (Fig. 27): A menu window shown in Fig. 18A is displayed, and the operator sets various verification conditions to be referred to upon verifying whether or not a new model vehicle is feasible, in the server computer 1 as needed. If the operator selects a button 183 "adjust associated items & priority evaluation criteria" on the menu window shown in Fig. 18A, a menu window shown in Fig. 18B is displayed.

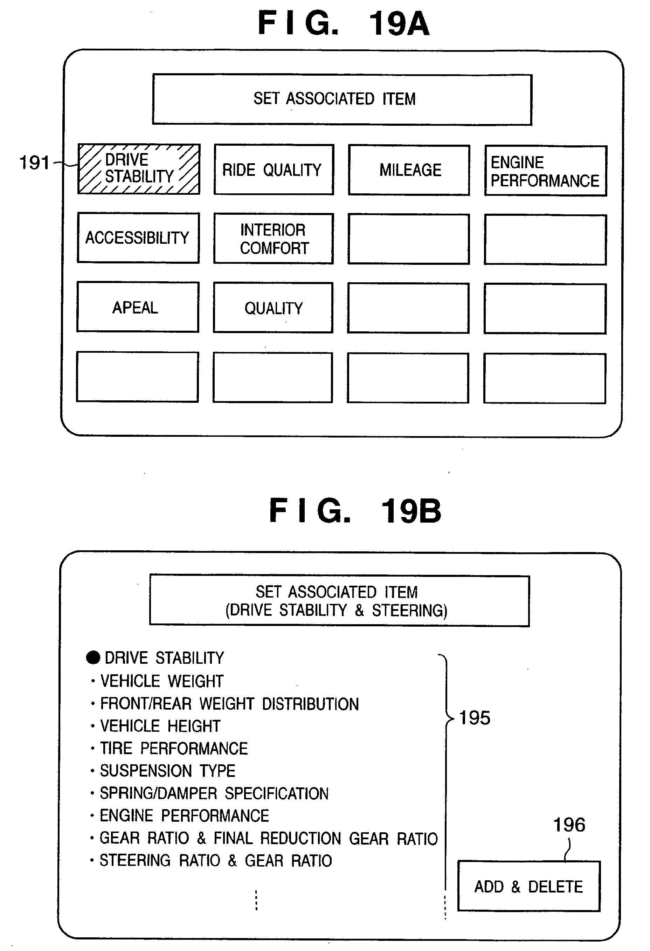

If the operator selects a button 184 "set associated items" on the menu window shown in Fig. 18B, a menu window used to set associated items is displayed, as shown in Fig. 19A. The operator can change the setup state of associated ones of a plurality of different performance items displayed on this menu window.

For example, if the operator selects a button 191 "drive stability" on the menu window shown in Fig. 19A, a window shown in Fig. 19B is displayed. A region 195 of this window displays a plurality of performance items and specification items that specify "drive stability" as the selected performance item as the setup state of associated items at the current timing when the server computer 1 searches the database 3. These plurality of performance items and specification items are information items included in respective records which are stored in the database 3 on the vehicle, module, and parts levels, as described above. The operator can edit the plurality of performance items and specification items displayed at that time by operating a button 196 "add & delete".

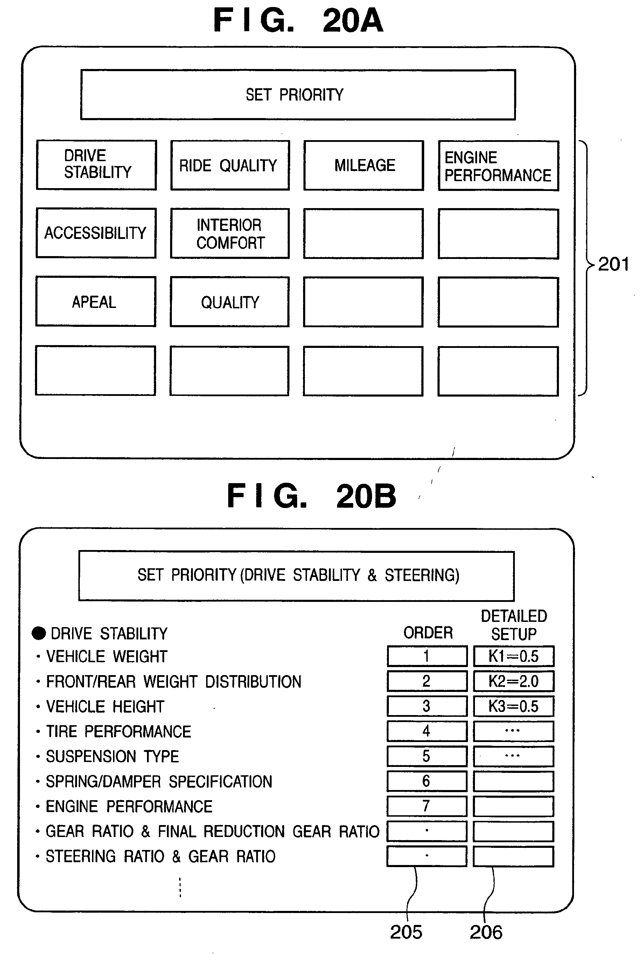

If the operator selects a button 185 "set priority" on the menu window shown in Fig. 18B and a menu window used to set priority shown in Fig. 20A is displayed, the operator can change priority setup states of a plurality of different performance items displayed on a region 201 of this menu window.

If the operator selects, e.g., a button "drive stability" on the menu window shown in Fig. 20A, a window shown in Fig. 20B is displayed.

A region 205 of the window shown in Fig. 20B displays setup states of priority of a plurality of performance items and specification items that specify drive stability as the selected performance item at the current timing when the server computer 1 searches the database 3, and the operator can change the displayed priority setups while permitting identical priority levels.

The server computer 1 considers the priority order set on the setup window shown in Fig. 20B together with allowable values (allowable ranges) that the operator can set for respective performance items and specification items on the setup windows shown in Figs. 7A and 7B upon calculating information indicating the feasibility of a new model vehicle. In this manner, the user's requests can be reflected in the calculation of the verification results, and the probability that the verification results cannot be provided to the user can be minimized (details will be described later).

Detail setup columns 206 shown in Fig. 20B display gains (coefficients) used in verification result calculations (to be described later) in correspondence with a plurality of performance items and specification items which specify the drive stability, and the operator can change the displayed gains.

As described above, in this embodiment, performance information of each item is stored in the database 3 as an evaluation score (evaluation value), and upon calculating the verification results, the performance information of a required item is handled as an individual evaluation score. However, the evaluation scores of performance information of respective items have largely different contribution levels on the performance of the whole vehicles depending on performance items.

Hence, in this embodiment, the operator can adjust gains used in verification result calculations on the windows shown in Figs. 20A and 20B. In this manner, when a total evaluation score TE of drive stability as an example of a performance item is calculated by adding evaluation scores En of a plurality of items, which specify the drive stability, a calculation TE = E1 + E2 + ... + En is made if gain adjustment is not available, while a calculation TE = K1 × E1 + K2 × E2 + ... + Kn × En is made using gains Kn corresponding to evaluation scores En, thus allowing practical verification.

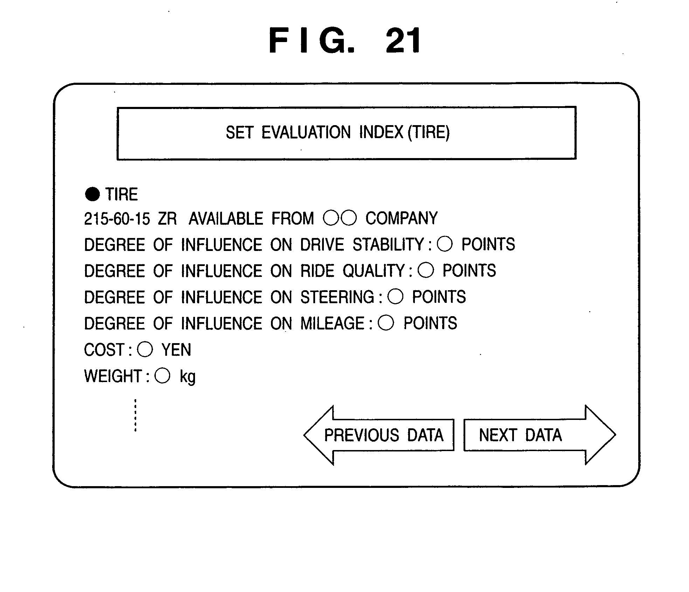

If the operator selects a button 186 "set evaluation index" on the setup window shown in Fig. 18B, an evaluation index setup window shown in Fig. 21 is displayed, and the operator can edit the evaluation scores of a plurality of performance items and numerical values of specification items associated with an existing part or module displayed on this menu window. In the example shown in Fig. 21, a window associated with a given tire of the existing parts registered in the database 3 is displayed in accordance with operator's choice, and an evaluation index of a tire different from the displayed one is displayed upon operation of a right or left arrow included in that window by the operator.

If the operator selects a button 181 "set vehicle to be compared" on the menu window shown in Fig. 18A, a selection window (not shown) used to set vehicles to be compared, which are referred to from the database 3 upon verifying the project, is displayed, and the operator can set a desired one of a plurality of different vehicles to be compared displayed on this selection window.

If the operator selects a button 182 "production line" on the menu window shown in Fig. 18A, the operator can select a production line which is used upon producing (mass-producing) a new model vehicle to be planned. The server computer 1 excludes existing modules and parts which cannot be used in the production line selected by the operator from the reference range when it refers to the database 3 upon executing project verification calculations.

Step S22: The operator inputs various target specifications that he or she wants to realize in the new model vehicle to be planned on the vehicle level on a region 71 of the setup window shown in Fig. 7A. As target specification items to be input in this step, items such as an interior length, interior width, interior height, minimum ground clearance, riding capacity, radius of minimum turning circle, wheel base, wheel tracks, and the like must be set in addition to the drivetrain type, genre, segment, size (total length, total width, total height), weight, and the like shown in Fig. 7A.

Upon inputting target specifications in individual items, target values and their allowable values (allowable ranges) must be set as target evaluation scores (on a scale of one to ten). In this embodiment, when the operator does not set any allowable value or sets zero, the server computer 1 determines that the target value of the corresponding item is absolutely essential for the operator, and makes a calculation using that target value without giving any allowable range to the target value in an arithmetic process in step S26 (to be described later). In this way, since the user himself or herself can arbitrarily set allowable ranges, the support process based on uniform automatic calculations of the server computer 1 can be flexibly made, thus improving convenience.

On a region 71 of the setup window shown in Fig. 7A, the operator can set a priority rank in place of practically setting a desired allowable value for a given target value. Several different priority ranks (A, B, C,...) are prepared in advance, and the operator can select one of these ranks for each item. In the server computer 1, a corresponding allowable range is set for each priority rank, and the widths of allowable ranges in the + and - directions to have a given target value as the center are set to satisfy A < B < C < ....

Step S23: The operator inputs a plurality of items of target performance that he or she wants to realize on the vehicle level in the new model vehicle to be planned on a region 72 on the setup window shown in Fig. 7B. The target performance items to be input in this step include drive stability, ride quality, engine performance, mileage, and the like. Upon inputting target performance in each individual item, a target score and its allowable value (allowable range) must be set as a target evaluation score (on a scale from one to ten) as in Fig. 7A as a value that represents target performance to be realized by the new model vehicle in correspondence with various performance items stored as evaluation scores in the database 3. In a target column, "leader" which locates a target performance item as a top class in a group of a plurality of existing vehicles (including a vehicle to be compared), or "among" that locates a target performance item as an average class in a group of a plurality of existing vehicles, can be set. For example, "leader" corresponds to an evaluation score of eight points or higher, and "among" corresponds to an evaluation score of six or seven points.

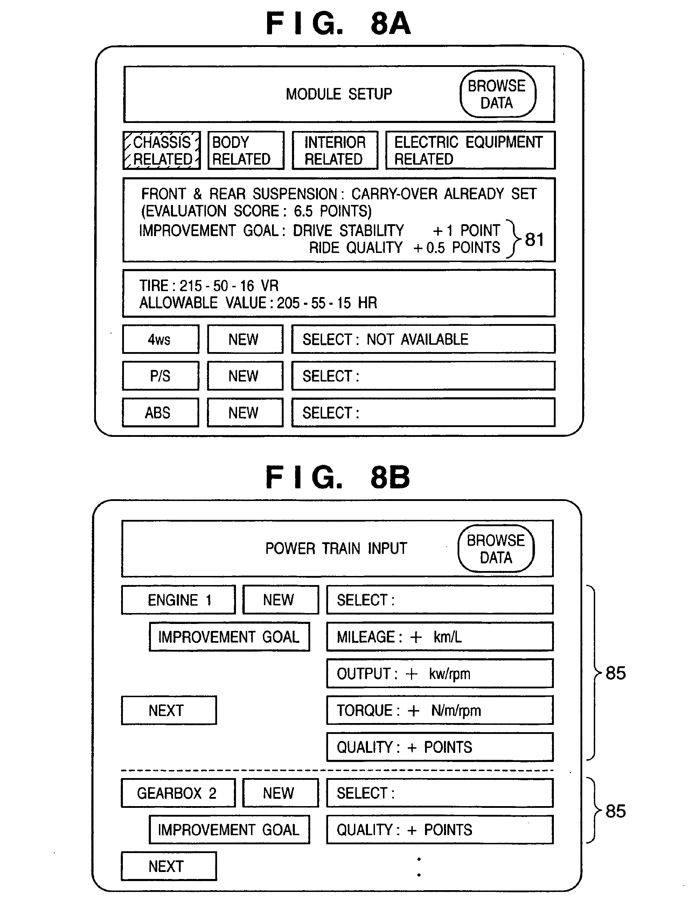

Step S24: If the operator selects a button 73 "detail input (module level)" on the setup window shown in Fig. 7B, a target performance setup window on the module level shown in Fig. 8A is displayed. This window exemplifies a state upon setting target performance in a "chassis related" module. More specifically, an existing part with an evaluation score of 6.5 points, which is stored in the database 3, is set as a carry-over part of front & rear suspensions in accordance with operator's input, and +1 point for drive stability and +0.5 points for ride quality are input in a region 81 as improvement goals for the evaluation score of 6.5 points (the selection operation of carry-over parts will be described later as step S25).

At this time, the adequacy of the changed evaluation value is determined on the basis of the degree of improvement of the old evaluation value of the corresponding item, which is stored in the database 3, and if it is determined that the changed evaluation value is not adequate, the operator is advised accordingly. For example, when an improvement goal of +1.5 points is set for the current evaluation score while the evaluation score was improved by +0.5 points on average every time design was previously updated a plurality of number of times, since it is expected that it is impossible to realize that target, the operator is advised accordingly in such case.

In this manner, when the user (person in charge of the planning department) sets an evaluation value that a person in charge of the industrial design department that takes on the post-process cannot realize, he or she is advised accordingly, thus preventing an impractical project of a new model vehicle from being formed. Therefore, high accuracy of project verification using specification information and performance information of existing vehicles, and a degree of technical progress expected upon designing and developing a new model vehicle to be planned in the industrial department in practice can be achieved in a balanced manner.

Note that carry-over parts are existing parts which are required to be adopted in a new model vehicle to be planned, and the database 3 already stores 3D CAD information such as solid models which contain 3D shapes and their dimensional information, various kinds of attribute information, and the like. One function unit formed by a plurality of carry-over parts (existing parts) is called a carry-over module.

On the target performance setup window on the module level shown in Fig. 8A, a tire to be used together with the aforementioned front & rear suspensions is set by operator's input. Furthermore, the presence/absence of necessity of setups of 4WS, power steering, ABS, and the like can be set on this window.

In step S24, target performance for a power train as an important module, which determines the drive performance of the new model vehicle among target items associated with a plurality of different modules, can be set on the setup window shown in Fig. 8B. On this setup window, the operator can select desired ones of a plurality of different engines, gearboxes, and the like, which are registered in the database 3 as existing parts (existing modules).

An evaluation score of a performance item or a merit value of a specification item is associated with a record of each existing part (existing module) stored in the database 3 as information indicating the current ability (merit). Hence, in this step, the operator can set an improvement goal of an evaluation value that he or she desires to achieve upon designing a new model vehicle in the industrial design department (a degree of desired improvement from the current ability of an existing part or the like) for a desired existing part (existing module) such as the selected engine, gearbox, or the like, on a region 85 of the setup window shown in Fig. 8B. At this time, the adequacy of the changed evaluation value is determined on the basis of the degree of improvement of old evaluation value of the corresponding item, and if it is determined that the changed evaluation value is not adequate, the operator is advised accordingly. As a result, high accuracy of project verification using specification information and performance information of existing vehicles, and a degree of technical progress expected upon designing and developing a new model vehicle to be planned in the industrial department in practice can be achieved in a balanced manner.

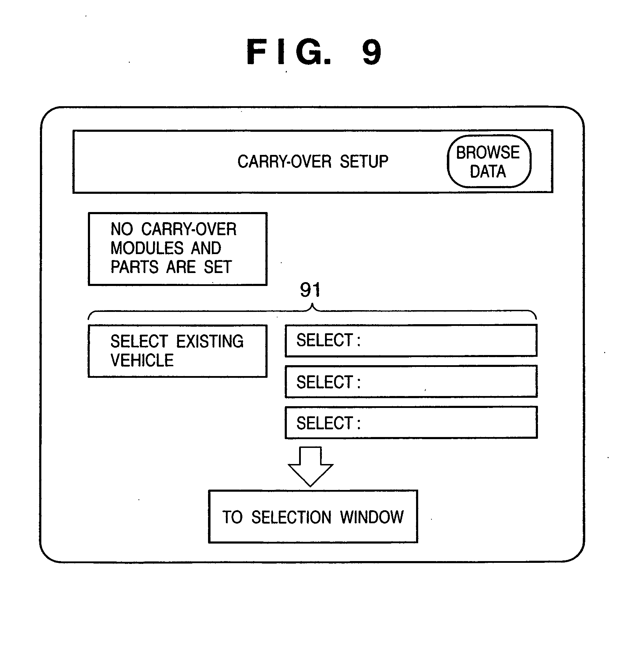

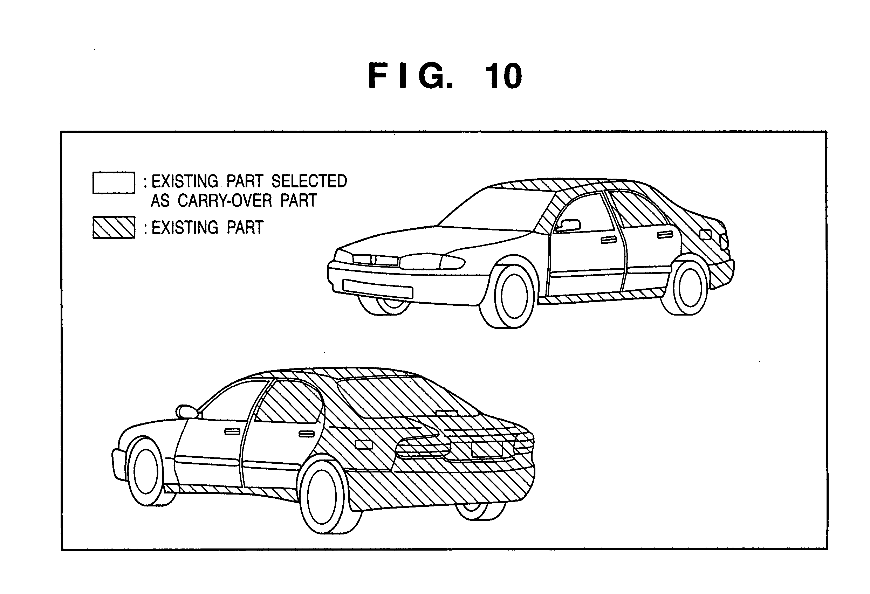

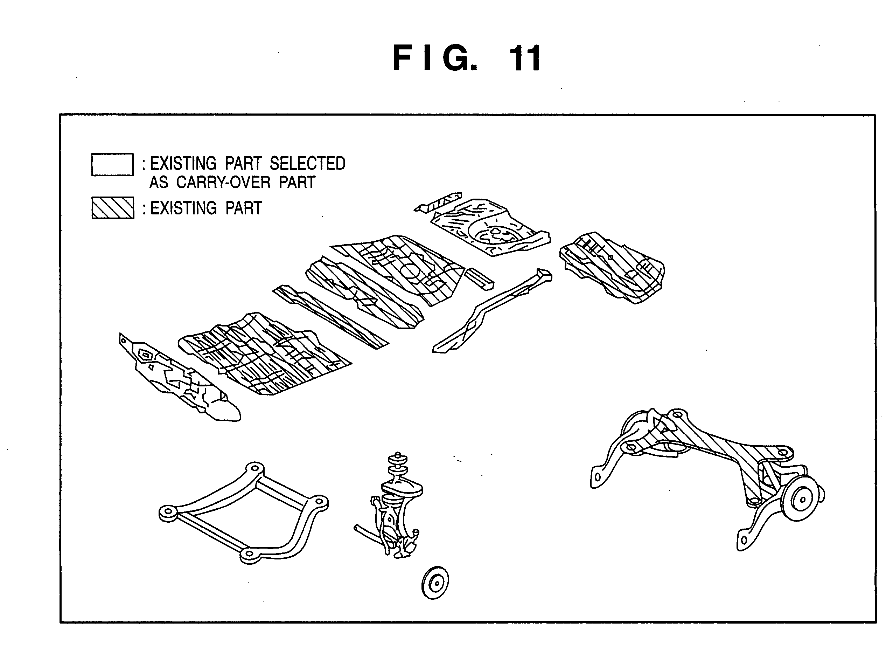

Step S25: Upon setting target performance on the module level in step S24, an existing part or module which is desired to be adopted in the new model vehicle to be planned can be selected on a region 91 of a carry-over setup window shown in Fig. 9. That is, when the operator selects one of existing vehicles registered in the database 3 upon operation of a button "select existing vehicle", a 3D-shape model of that existing vehicle is displayed on the display of the user terminal 2 using a solid model and the like as the design information of the corresponding existing vehicle. The operator can select an existing part or module which form that existing vehicle from the 3D-shape model displayed on the display as a carry-over part or module to be adopted in the new model vehicle by a selection operation using a pointing device such as a mouse or the like, as shown in Figs. 10 and 11.

Figs. 10 and 11 show examples of 3D-shape models of the existing vehicle from which the operator has selected carry-over parts or modules. In Figs. 10 and 11, parts or modules which are not set as carry-over parts or modules are indicated by hatching, and those which are set as carry-over parts or modules are indicated by reverse patterns.

Since it is premised that the existing part or module selected on the carry-over setup window shown in Fig. 9 is diverted intact (in design) even when it is adopted in the new model vehicle to be planned, a manual setup of some improvement goal is permitted, as shown in Fig. 8A, but it is restricted to largely update the performance information or specification information of the existing part or module set as the carry-over part or module by operator's operation or upon calculations for project verification in principle in this system.

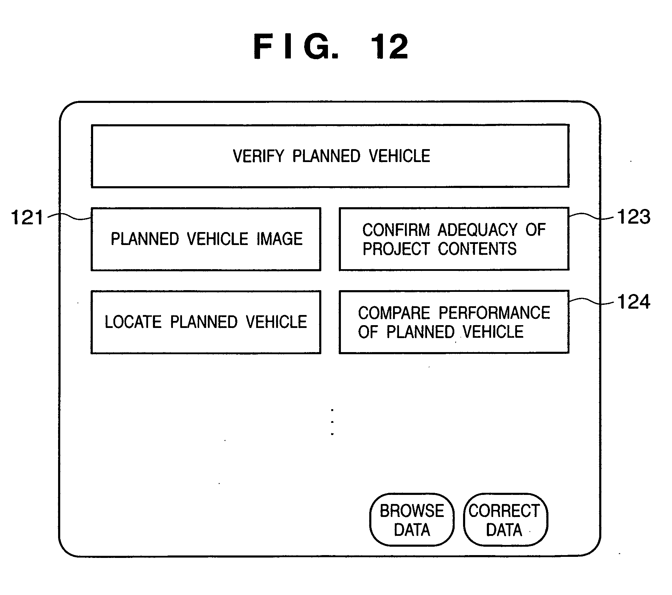

Step S26: After the target performance and specifications of the new model vehicle to be planned on the vehicle and module levels are set in the aforementioned steps, the operator can verify the project of the new model vehicle using a display window shown in Fig. 12. The verification results calculated based on the set target performance and specifications are presented to the operator of the user terminal 2.

If the operator operates a button 121 "planned vehicle image" on the display window shown in Fig. 12, a graphic that represents the new model vehicle to be planned is displayed on the display of the user terminal 2 on the basis of the target performance and specifications set in the above steps.

However, the shape of the vehicle displayed at this time does not have a design (shape design) unique to that vehicle, and is a graphic which is formed based on a vehicle shape by reflecting size information set on the setup window in Fig. 7A in the shape of an occupied space roughly determined by the genre and segment of the new model vehicle set on that setup window, and by laying out the selected existing modules (including carry-over modules), existing parts, and the like in the base vehicle shape (simple body). Upon laying out the existing modules and parts in the base vehicle shape, the layout restriction conditions which are stored in the database 3 and are associated with the individual existing parts and modules, as shown in Fig. 4, are referred to.

More specifically, principal components which form a vehicle are automatically laid out in a given coordinate space of the simple body determined based on the set genre, segment, and size of the vehicle in accordance with the layout restriction conditions which are stored in the database 3 in the associated state, using 3D design information of various existing modules. At this time, the 3D design information of each individual existing module is not directly used, but only outer shape information (length, width, height) and barycentric position information contained in that design information are used so as to lay out and move each individual component on a 3D box level such as a cube, cylinder, or the like, and the detailed design shape, attribute information, and the like of respective portions expressed as a solid model or the like are not used.

However, when a given existing module is used as a carry-over module, since it is premised that it is diverted without changing the current design even in a new model vehicle to be planned, the 3D design information of that existing module is directly used, and a change in layout is restricted, thus easily planning an economically efficient new model vehicle.

Components to be automatically laid out in the simple body are principal ones such as tires, suspension modules, an engine module, a steering wheel, seats, an instrument panel, a fuel tank, and the like, and these components are automatically laid out in the simple body in accordance with the layout restriction conditions associated with them.

For example, in automatic layout in the simple body, the layout restriction condition associated with tires is to locate the barycenter of each tire at the central position of a tire house, and that associated with the engine module is to, e.g., locate the engine module at a position ** mm behind the n-th front member. Since the graphic displayed in this case is used to make the operator as the person in charge of the planning department determine adequacy of the project, slight interference among individual existing modules and parts is allowed upon layout as long as the aforementioned layout restriction conditions are met.

In this manner, since individual existing modules and/or existing parts are laid out while allowing some interference on the display window based on which the user verifies feasibility of a minimum required layout, the process required to lay out respective components can be quickly done. The operator can easily verify feasibility of a physical layout of the new model vehicle.

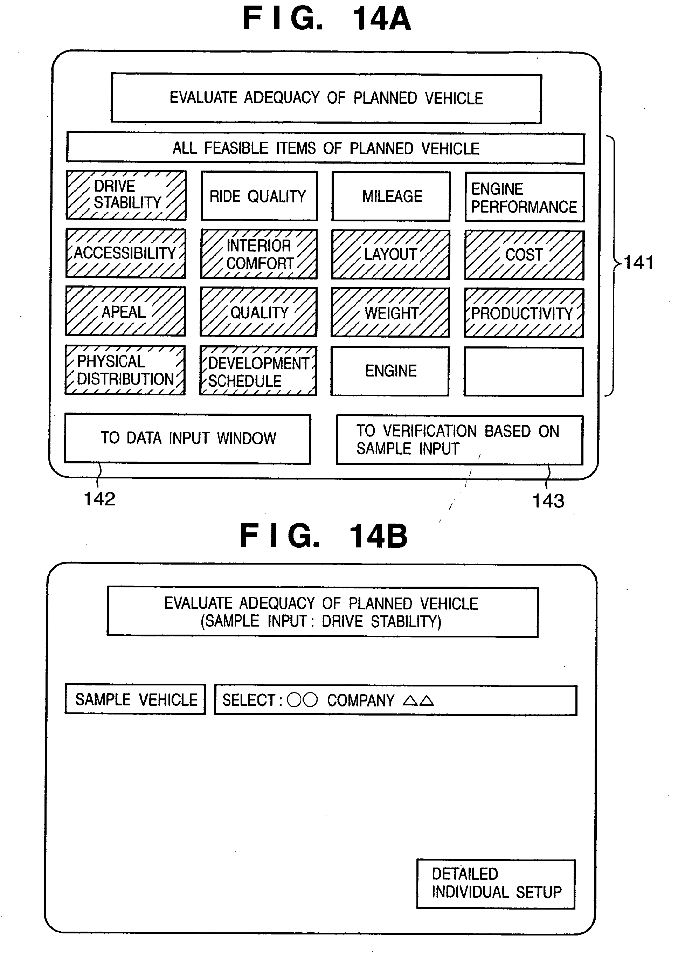

If the operator operates a button 123 "confirm adequacy of planned vehicle" on the display window shown in Fig. 12, a menu window shown in Fig. 14A is displayed. This menu window displays a plurality of items that allow to evaluate adequacy of the new model vehicle to be planned. Of these items, those for which the operator has set the target performance and specifications of all predetermined required items in the aforementioned steps are displayed in a reverse pattern, and those which are deficient in setups of some information are indicated by hatching, thus informing the operator of it.

As for an item which is deficient in setups of information, when the operator operates a button 142 "to data input window", he or she can go back to respective setup windows that have been explained in the above-mentioned steps, and can individually input desired values.

Also, as for an item which are deficient in setups of information, when the operator operates a button 143 "to verification based on sample input" on the menu window shown in Fig. 14A, he or she can select performance information and specification information associated with an existing vehicle, which are stored in the database 3, as a sample, on the select window shown in Fig. 14B, thus simultaneously setting the target performance and specifications required to evaluate adequacy of that item in the server computer 1, and simplifying user's input operations.

When the operator operates a button "detailed individual setup" on the window shown in Fig. 14B, a list of performance information and specification information simultaneously set for a given item, as described above is displayed, and the operator can manually adjust (change) individual information of each of items displayed in the list.

As described above, in this embodiment, when the operator sets the target specifications and performance of the new model vehicle in the server computer 1, since he or she can easily select information to be input to respective items from definite information which is to be processed definitely, indefinite information which is to be processed indefinitely, and specification information and performance information of some existing vehicle stored in the database 3, the operator can tentatively verify the project of the new model vehicle using the selected information even when some pieces of definite information are not available, thus implementing a rational project planning process.

On the other hand, in case of an item which is displayed in a reverse pattern on a region 141 of the menu window shown in Fig. 14A, and for which target performance and specifications of all predetermined required items are set, an expected estimation value is calculated based on the target performance and specifications, and a verification result according to the calculated result is provided to the user terminal 2.

In step S26, the server computer 1 seeks verification results which best satisfy target scores of the target specifications and performance of respective items set by the operator on the setup windows shown in Figs. 7A and 7B. Upon calculations, the allowable values (or priority ranks set in place of the allowable values) set in correspondence with the target specifications and performance of respective items, and priority of respective items set by the operator on the setup windows shown in Figs. 20A and 20B are taken into consideration.

That is, in this step whether or not a new model vehicle which satisfies the target specifications and/or target performance within the allowable range set by the operator for the target specifications and/or target performance is calculated on the basis of information of respective items stored in the database 3.

More specifically, in this embodiment, if the project of the new model vehicle is infeasible without changing the set target scores of the target specifications and/or target performance, the server computer 1 makes calculates by appropriately increasing/decreasing a given target value used in calculations within the allowable range having that target value as the center, thus seeking feasibility of the project of that new model vehicle. Upon calculations, the target score (target evaluation score) of each item is automatically changed within the allowable value (allowable range) of that item set on the setup windows shown in Figs. 7A and 7B in accordance with priority of the item set on the setup windows shown in Figs. 20A and 20B. At this time, when the operator sets zero or no allowable value in the column of the allowable value on that setup window, calculations are made without changing the target evaluation value of the corresponding item.

In step S26 in Fig. 27, when the operator sets the priority rank in each item on the setup window in place of individually setting his or her desired allowable value so as to reduce the load on user's operations, or when the operator sets a target in place of setting the allowable value of each item on the setup window in Fig. 7B, a broader allowable range may be automatically set for the corresponding information item as the priority rank or target set by the operator is lower.

Upon executing project verification in step S26, it is a given fact that calculations are made within the range that satisfies the upper and lower limit values set in step S1.

Figs. 15A and 15B show examples of the verification result of the new model vehicle to be planned when an item "ride quality" is selected on the region 141 in Fig. 14A.

In the example shown in Fig. 15A, as information indicating feasibility of the new model vehicle, a region 151 indicates that the project is infeasible based on the target performance and specifications previously set by the operator, and displays a numerical value which represents an infeasible ratio. Also, a region 152 in Fig. 15A displays a calculated expected evaluation value in contradistinction to the target evaluation score, and gives guidance on suggestions to satisfy that target evaluation score, and influences on other portions when these suggestions are adopted. In this way, in this embodiment, since information that pertains to the degree of achievement of the target specifications and/or target performance set by the operator is provided together with the verification result, the user can objectively recognize the adequacy of his or her setups.

The verification result displayed on that display window contains information associated with cost required to realize the new model vehicle to be planned. Since this information associated with cost is calculated with high accuracy using practical cost information stored in the database 3, the operator can easily plan a practical new model vehicle.

In the example shown in Fig. 15B, as information indicating feasibility of the new model vehicle, a region 151 displays that project based on the target performance and specifications previously set by the operator is feasible, a region 155 displays a calculated expected evaluation value in contradistinction to the target evaluation score to inform the operator of the degree of achievement with respect to the target evaluation value, and a region 156 gives guidance on the degree of influence on other performance items when that target evaluation score is satisfied. In this manner, the operator can easily and quickly plan a project of a new model vehicle which satisfies target performance set in the performance item to be verified, in consideration of influences on other ones of a plurality of different performance items.

In a preferred embodiment, in step S26 if another performance item other than the performance item selected by the operator as the item to be verified impairs beyond a reference, an alarm is preferably given to the operator in association with the target evaluation value input in Fig. 7A or 7B. In this case, the reference includes various upper and lower limit values set on the setup windows in Figs. 6A and 6B, and the allowable range of that performance item. In this way, a project of an unbalanced new model vehicle, which is inferior in the merit of a specific performance item, can be prevented from being planned.

As described above, in this embodiment, when the new model vehicle which can achieve the target specifications and/or target performance set by the operator is less feasible or infeasible, suggestions for improving the verification result are provided together with the result. The user can recognize adequacy of his or her setups, and an index for realization (bottlenecks to be eliminated), thus improving the efficiency of the project planning process of the new model vehicle.

Fig. 16 shows an example of the verification result of the new model vehicle to be planned when an item "engine" is selected on the region 141 shown in Fig. 14A. As information indicating feasibility of the new model vehicle, a result indicating that the project is infeasible based on the target performance and specifications previously set by the operator and a value indicating the infeasible ratio (region 161), and guidance on a measure to achieve the target performance (region 162: since no appropriate measure is available in Fig. 16, reasons for it) are displayed. In this way, in this embodiment, since not only the verification result on the vehicle level is provided, but also the calculation result of the verification result for each module, i.e., an engine, can be provided, the user can make more close examination.

The expected evaluation value (expected merit value) calculated as the verification result is calculated by TE = K1 × E1 + K2 × E2 + ... + Kn × En using evaluation scores En and gains Kn of a plurality of items which specify the performance item ("ride quality" in this case" of interest, as has been explained in the paragraphs of gain adjustment (Fig. 20B). Note that the calculation method of the total evaluation score TE is not limited to such specific method, and various other methods may be used. The reason why guidance on suggestions for improvement and the degree of influence on other items can be given, as shown in Figs. 15A and 15B, is that associated items and the order of items to be satisfied are set in advance on the association setup windows shown in Figs. 19A and 19B, and the priority setup windows shown in Figs. 20A and 20B.

The operator can return from the verification result display window shown in Fig. 15A, 15B, or 16 to the aforementioned setup windows so as to adjust information set in the server computer 1.

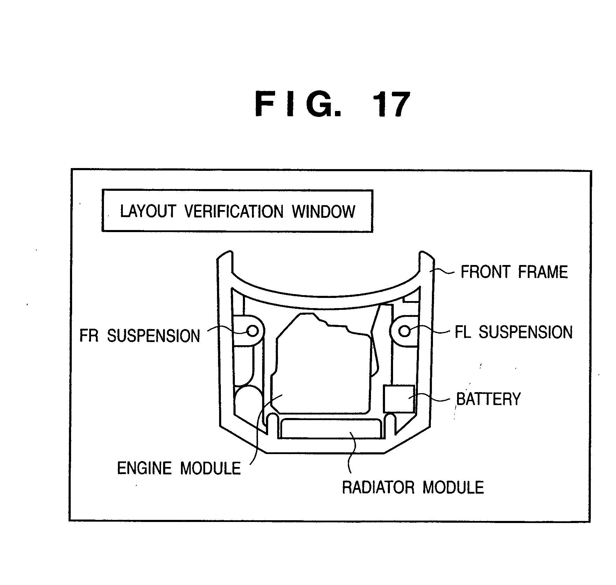

Fig. 17 shows an example of a layout verification result of the new model vehicle to be planned when an item "layout" is selected on the region 141 shown in Fig. 14A, and shows, e.g., a state wherein an engine room is viewed from the above, of the graphic displayed on the display of the user terminal 2 upon operation of the button 121 "planned vehicle image".

In layout verification, the operator can examine the layout while appropriately moving components automatically set in the simple body by the server computer 1 via selection operations using a pointing device such as a mouse or the like.

If the operator operates a button 124 "compare performance of planned vehicle" on the display window shown in Fig. 12, the expected evaluation values of the new model vehicle to be planned are calculated on the basis of the target performance and specifications set in the above steps, as described above, and are displayed on the display of the user terminal 2 in comparison with evaluation values indicating the merits of vehicles to be compared of the existing vehicles registered in the database 3 for respective vehicles, performance items, or modules.

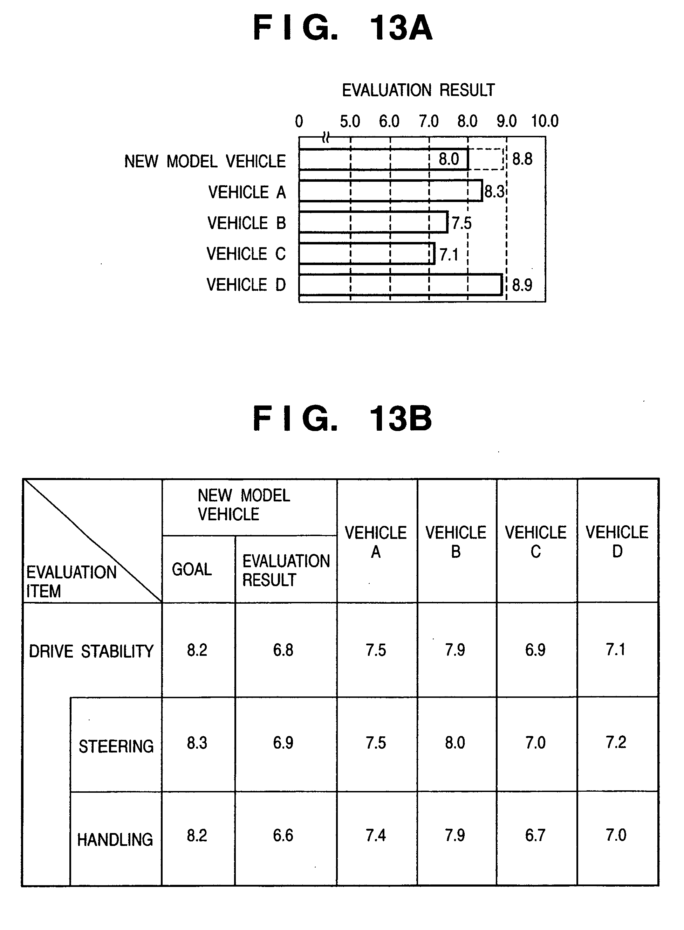

Figs. 13A and 13B show examples of display windows used to compare the expected evaluation values of the new model vehicle to be planned with evaluation values indicating the merits of vehicles to be compared as the verification result. Fig. 13A shows the comparison results for respective vehicles, and Fig. 13B shows the comparison results of drive stability as an example of display for respective performance items. In either display example, since the expected evaluation value calculated by the server computer 1 in this step is lower than the target evaluation value set by the operator in association with the new model vehicle to be planned, the operator must repeat adequacy evaluation until an appropriate expected estimation value is obtained by adjusting the target performance and specifications set in the aforementioned steps. In this embodiment, by only setting information associated with the new model vehicle to be. planned, and the vehicles to be compared with that new model vehicle in the server computer 1, since the comparison results are provided to the user as a graph based on a common axis for respective vehicles (Fig. 13A), modules, or performance items (Fig. 13B), the user can easily and objectively develop the product value of the new model vehicle with respect to the vehicles to be compared.

As described above, according to the planning process of a new model vehicle based on the target performance and specifications, when the user sets the target specifications and performance of a new model vehicle to be planned in the server computer 1 using the setup windows shown in Figs. 7A and 7B, information indicating feasibility of that new model vehicle is automatically calculated with reference to information that pertains to existing vehicles; and a project of a practical new model vehicle with high accuracy can be quickly and easily planned. In this manner, the total period from planning of a new model vehicle until start of mass-production can be shortened.

Also, carry-over parts and/or carry-over modules which are widely used upon planning a new model vehicle can be easily set in the server computer using the setup windows shown in Figs. 9 to 11, and information indicating feasibility of that new model vehicle can be calculated in consideration of the set carry-over parts and/or carry-over modules, thus easily planning the project of an economically efficient new model vehicle.

### <Planning Process of Performance specialized Vehicle>

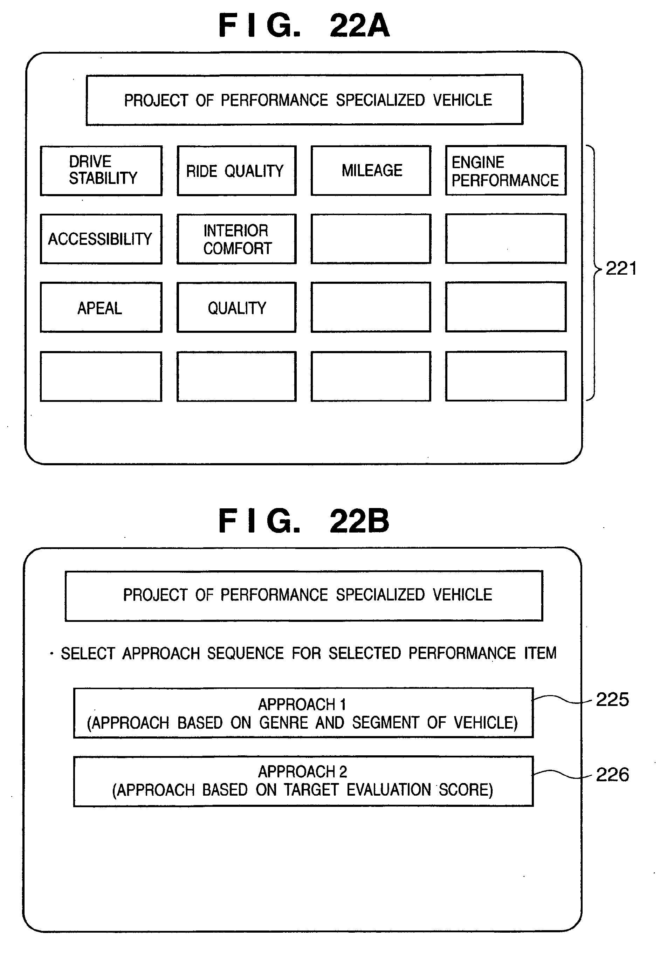

The planning process of a performance specialized vehicle will be described below with reference to Figs. 22A and 22B to Fig. 25, and Fig. 28.

Fig. 28 is a flow chart showing details of the planning process of a performance specialized vehicle (step S4) of the project planning support process of a new model vehicle executed by the server computer 1 in this embodiment.

Step S31 (Fig. 28): The operator sets various conditions to be referred to upon verifying if a new model vehicle is feasible, as needed using the menu windows shown in Figs. 18A and 18B, as in step S21 (Fig. 27) in the detailed description of the planning process of a new model vehicle based on the target performance and specifications (step S3).

Step S32: A region 221 on a menu window shown in Fig. 22A displays various performance items of a new model vehicle on the vehicle level. The operator selects a performance item he or she wants to specialize in a new model vehicle to be planned. If the operator selects one of those performance item, the flow advances to step S33.

Step S33: The operator must select an approach sequence upon specializing the performance item selected on the menu window shown in Fig. 22A.

In this embodiment, as the approach sequence upon specializing the performance item of operator's choice, a sequence based on the genre and segment of a vehicle (approach 1) and a sequence based on a target evaluation score (approach 2) are prepared, as shown in the menu window of Fig. 22B. If approach 1 (button 225) is selected on this window, the flow advances to step S34; if approach 2 (button 226) is selected, the flow advances to step S35.

Step S34: since the operator has selected approach 1 in step S33, a setup window shown in Fig. 23A is displayed in this step. The operator must input given entries of the performance item selected on the menu window shown in Fig. 22A, on this setup window.

More specifically, on a region 231 on the setup window shown in Fig. 23A, the genre and segment of the new model vehicle to be planned, the presence/absence of necessity of carry-over parts and/or carry-over modules, and the range of the database 3 (condition of data to be extracted) to be referred to upon making a project search of the new model vehicle must be set. Note that a plurality of types of genres and segments corresponding to closer drive performance or vehicle characteristics may be set.

Note that the carry-over parts and/or carry-over modules are selected in step S34 using the same window development as that of the man-machine interface that has been explained above with reference to Figs. 9 to 11. As the reference range of the database 3 upon making a project search, a vehicle to be compared can be set.

In this embodiment, since the user can set the reference range of the database 3, the database reference range is limited to that of user's choice upon verifying a project, and the project can be practically and efficiently verified in keeping with the user's intention.

Step S35: Since the operator has selected approach 2 in step S33, a setup window shown in Fig. 24A is displayed in this step. The operator must set the target evaluation score of the previously selected performance item, and the range of the database 3 (condition of data to be extracted) to be referred to upon making a project search in association with the performance item selected on the menu window in Fig. 22A, on a region 241 of this setup window.

More specifically, the operator must set the target evaluation score to be achieved for the performance item (drive stability in the example shown in Fig. 24A) to be specialized in the new model vehicle (performance specialized vehicle in this case) to be planned using the same scale as evaluation scores of various performance items stored in the database 3, i.e., in a scale from one to ten, and a part or module as a large factor which specifies that performance item, on the region 241 of the setup window shown in Fig. 24A.

On this setup window, various items such as the weight of the vehicle and the like can be set to limit the range of the database 3 to be referred to by the server computer 1 upon making a project search, and carry-over parts and/or carry-over modules, the genre and segment of an existing vehicle, and a vehicle to be compared can be selected as in approach 1 mentioned above. Note that a plurality of types of genres and segments corresponding to closer drive performance or vehicle characteristics may be set.

Step S36: If the operator operates a "search" button 232 or 242 on the setup window shown in Fig. 23A or 24A, the flow advances to step S37.

Step S37: If approach 1 is selected, the project of the new model vehicle, which satisfies the conditions set using the setup window in Fig. 23A in step S34, is searched for. On the other hand, if approach 2 is selected, the project of the new model vehicle, which satisfies the conditions set using the setup window in Fig. 24A in step S35, is searched for. In this case, the search is made with reference to information of various items stored in the database 3 within the limited reference range set by the operator, and the evaluation score of the performance item is calculated in the same manner as in the total evaluation store in the aforementioned planning process of the new model vehicle based on the target performance and specifications.

Fig. 23B shows an example of the search result of a project of a new model vehicle when approach 1 is selected. A region 234 of the search result shown in Fig. 23B displays the best combination of existing parts and/or existing modules (corresponding to items displayed in a column of details) for realizing a new model vehicle that satisfies the previously selected target item (drive stability in this case), the expected evaluation score (expected merit value) of the performance item realized by that combination, and cost required for the best combination that can achieve the expected evaluation score. Note that the cost can be obtained by summing up cost information stored in the database 3 on the parts and module levels in correspondence with existing parts and/or existing modules selected to form the best combination.

Since the best combination of the existing parts and/or existing modules displayed on the window of Fig. 23B is information calculated using information of various items associated with existing vehicles stored in the database 3, such best combination is also information indicating the performance of a new model vehicle which is feasible in association with the performance item of operator's choice in the practical circumstance such as the current production power, merit, and the like of the vehicle manufacturer which manages this system.

Fig. 24B shows an example of the search result of a project of a new model vehicle when approach 2 is selected. In the search result on a region 244 shown in Fig. 24B, parts or modules (two different tires) that satisfy the target score set in Fig. 24B in association with the target item (drive stability in this case) selected in Fig. 22A are displayed.

Step S38: If the operator operates a "specification examination" button 235 or 245 on the window in Fig. 23B or 24B displayed in step S37, a window shown in, e.g., Fig. 25 is displayed, and the operator can examine the search result on this window.

Fig. 25 shows an example of a tree structure displayed to examine/edit the search result calculated by the server computer 1 in association with the performance item of operator's choice.

In the tree structure shown in Fig. 25, the arrangement of existing modules and parts which specify the performance item previously selected by the operator is displayed in association with that performance item while being classified into three layers, i.e., vehicle, module, and parts levels, in place of the existing parts and/or existing modules which form the best combination calculated by the server computer 1. Note that display items on the module level may often be classified into sub-modules of a plurality of layers in accordance with the type of performance module of interest. In this case, "mileage" is selected on the vehicle level as the performance item of operator's choice, and items "engine performance", "drive system performance", "vehicle weight", "aerodynamics performance", and "rolling resistance" are associated on module level 1 as performance elements required to achieve that "mileage", and sub-performance elements on module level 2 which form individual performance elements are associated with each of these performance elements on module level 1. At least one part which specifies a given sub-performance element is associated with that sub-performance element.

If "drive stability" is selected on the vehicle level as the performance item of operator's choice, the module level (module level 1) includes items "tire & suspension characteristics", "engine performance", "drive system performance", "weight", "weight distribution", and "steering gear ratio" as performance elements required to that "drive stability".

The operator can select a desired item to be examined on the module or parts level on this window so as to display a detail window (not shown), and can edit (change) specification information of existing parts or modules corresponding to the selected desired item on that window. Furthermore, the operator can select a desired item to be examined on the module or parts level, and can replace existing parts or modules corresponding to the selected desired item by other existing parts or modules.

Step S39: After the examination/edit process in step S38, if the operator goes back to the setup window shown in Fig. 23A or 24A and operates the "search" button again, a project of a new model vehicle is searched for again in step S37 by reflecting the information changed in step S38 in accordance with the selected sequence of approach 1 or 2.

As described above, according to the planning process of a performance specialized vehicle, by only making simple setup operations in approach 1 or 2 for a specific performance item to be specialized in a new model vehicle, the vehicle configuration to be adopted in that new model vehicle can be automatically calculated. Hence, a new model vehicle in which the performance item of user's choice is specialized can be easily planned.

In the aforementioned planning process of a performance specialized vehicle, if the operator selects approach 2, the vehicle configuration to be adopted in a new model vehicle can be automatically calculated by only setting the target evaluation value of a specific performance item to be specialized in the new model vehicle. Hence, a new model vehicle in which the performance item of user's choice is specialized can be easily planned.

In the aforementioned planning process of a performance specialized vehicle, the operator makes the server computer 1 repeat the processes in steps S37 to S39 until a project of a new model vehicle that satisfies the target performance is obtained, while changing the displayed tree structure by simple operations, thus efficiently elaborating the best vehicle configuration.

As described in the above embodiment, project information of a new model vehicle generated in the planning department using the server computer 1 is information generated based on practical information, which has already been realized in conventional vehicles in the processes of industrial design, analysis, vehicle evaluation tests, and the like. For this reason, this information has higher accuracy than specifications described in a conventional project book, and the industrial design department which receives the project information can immediately start practical mass-production design using that project information as an "absolute job instruction".

If the top management of an enterprise, who must determine if a new model vehicle is to be developed and retailed, can refer to the project information which has been fixed up as in this embodiment upon determining the project of the new model vehicle proposed from the planning department prior to mass-production design in the industrial design department, since that project information is information organized based on practical information, which has already been realized in conventional vehicles, and can be graphically displayed as needed, the top management can figure items to be examined such as product value, adequacy, and the like of the new model vehicle to be determined more practically and easily than a conventional system that refers to paper documents, thus quickly making right decisions.

Note that the present invention that has been exemplified using the above embodiment is achieved by supplying a computer program that can implement the functions of the flow charts used in the above description to the aforementioned server computer 1, and reading out and executing that program by a CPU of the server computer 1. The computer program supplied to the server computer 1 may be stored in a storage device such as a programmable memory, hard disk device, or the like.

In the former case, as the method of supplying the computer program to each apparatus, currently prevalent sequences such as a method of installing the program in the apparatus via various recording media such as a flexible disk and the like, a method of downloading the program from an external apparatus via a communication line such as the Internet or the like, and the like can be adopted. In such case, the present invention is constituted by a code of such computer program or a storage medium.

### <Operations and Effects of Embodiment>

According to the aforementioned embodiment, the user can easily recognize whether or not a new model vehicle to be planned is practically feasible.

More specifically, a new model vehicle project planning support system according to the above embodiment comprises:
(1) an information storage function of storing specification information and performance information of a plurality of existing vehicles in a database (3, Fig. 4);
   an input function (region 71 in Fig. 7A, region 72 in Fig. 7B) of allowing a user to input target specification and performance data (e.g., at least one of performance items such as mileage engine performance, drive stability, and ride quality of a new model vehicle) of a new model vehicle to be planned in a server computer 1; and
   an information providing function (region 151 in Fig. 15A, region 155 in Fig. 15B, region 161 in Fig. 16) of calculating information indicating feasibility of a new model vehicle that satisfies the target specification and performance data input by the input function on the basis of information of respective items stored in the database, and providing the calculation result to the user, so as to support project planning by the user.
   Therefore, according to the above arrangement, when the user sets target specification and performance data (mileage, engine performance, drive stability, ride quality, and the like) of a new model vehicle to be planned in the computer, information indicating feasibility of that new model vehicle is automatically calculated with reference to information associated with existing vehicles, thus easily planning a project of a practical new model vehicle with high accuracy within a short period of time.
(2) In this embodiment, the database further stores information associated with a plurality of existing parts which form the plurality of existing vehicles in association with the specification information and performance information of the plurality of existing vehicles by the information storage function,
   the system further comprises an existing part selection function (region 91 in Fig. 9, Figs. 10 and 11) of allowing the user to select a desired existing part from the plurality of existing parts as a carry-over part which is desired to be adopted in the new model vehicle with reference to information of respective items stored in the database, prior to execution of the information providing function, and
   when the user selects at least one existing part by the existing part selection function, the information providing function calculates the information indicating feasibility of the new model vehicle in consideration of information associated with the selected existing part.
   Or the database further stores identification information (e.g., type Number "types XX, YY,..." shown in Fig. 4) used to specify an existing module, to which each individual existing part belongs, of a plurality of existing modules which form the plurality of existing vehicles and each of which consists of a plurality of existing parts, in association with the specification information and performance information of the plurality of existing vehicles by the information storage function,
   the system further comprises an existing module selection function (region 91 in Fig. 9, Figs. 10 and 11) of allowing the user to select a desired existing module from the plurality of existing modules as a carry-over module which is desired to be adopted in the new model vehicle by referring to the database using the identification information specified by user's selection operation as a search key, prior to execution of the information providing function, and
   when the user selects at least one existing module by the existing module selection function, the information providing function calculates the information indicating feasibility of the new model vehicle in consideration of the selected existing module.
   Therefore, according to at least one of the above arrangements, since carry-over parts (carry-over modules), which are normally set upon planning a new model vehicle, can be set, and information indicating feasibility of that new model vehicle is automatically calculated in consideration of the set carry-over parts (carry-over modules), an economically efficient new model vehicle can be easily planned.
(3) In this embodiment, the database further stores information associated with cost of a plurality of existing parts which form the plurality of existing vehicles in association with the specification information and performance information of the plurality of existing vehicles by the information storage function,
   the input function can input target cost (e.g., parts cost) for the new model vehicle or each module which is formed by a plurality of parts that form the new model vehicle (region 61 in Fig. 6A, region 62 in Fig. 6B), and
   when the user inputs the target cost by the input function, the information providing function calculates the information indicating feasibility of the new model vehicle that satisfies the target specification data, target performance data, and target cost, on the basis of information of respective items stored in the database, and provides the calculation result to the user.
   Therefore, according to the above arrangement, since cost required to realize the new model vehicle to be planned can be accurately calculated using practical cost information stored in the database, a practical new model vehicle can be easily planned.
(4) In this embodiment, when the user inputs the target specification and performance data of the new model vehicle across a plurality of items by the input function, the user can further input a priority order that the information providing function handles the input target specification and performance data of the plurality of items (region 201 in Fig. 20A, region 205 in Fig. 20B), and
   when the user inputs the priority order by the input function, the information providing function calculates the information indicating feasibility of the new model vehicle in consideration of the input priority order.
   Therefore, according to the above arrangement, since information indicating feasibility of the new model vehicle is calculated in consideration of the priority order set for the target specification and performance data of a plurality of items, user's wish can be reflected in a verification result calculation, and the probability that the verification results cannot be provided to the user can be minimized.
(5) In this embodiment, the information providing function provides a calculation result for each module (e.g., engine in Fig. 16) which forms the new model vehicle and consists of a plurality of parts to the user as the information indicating feasibility of the new model vehicle.
   Therefore, according to the above arrangement, since the calculation result of the verification result can be provided for respective modules, the user can make more close examination.
(6) According to this embodiment, the information providing function provides information (region 151 in Fig. 15A, region 155 in Fig. 15B, region 161 in Fig. 16) associated with a degree of achievement of the target specification data and/or target performance data input by the input function as the information indicating feasibility of the new model vehicle.
   Therefore, according to the above arrangement, since information associated with the degree of achievement of the target specification data and/or target performance data set by the user is provided together with the verification result, the user can objectively recognize the adequacy of his or her setups.
(7) According to this embodiment, the information providing function provides information (region 152 in Fig. 15A, region 156 in Fig. 15B, region 162 in Fig. 16) associated with suggestions for improving feasibility of the new model vehicle together with the information indicating feasibility of the new model vehicle.
   Therefore, according to the above arrangement, even when a new model vehicle which can achieve the target specification data and/or target performance data set by the user is less feasible or infeasible, suggestions for improving the verification result is provided together with the result. The user can recognize adequacy of his or her setups, and an index for realization, thus rationally planning a new model vehicle.
   Furthermore, a new model vehicle project planning support system according to the above embodiment comprises:
(8) an information storage function of storing specification information and performance information of a plurality of existing vehicles in a database (3, Fig. 4);
   an input function (region 71 in Fig. 7A, region 72 in Fig. 7B) of allowing a user to input target specification and performance data of a new model vehicle to be planned in a server computer 1; and
   an information providing function (Figs. 15A, 15B, and 16) of calculating, based on information of respective items stored in the database, whether or not the new model vehicle that satisfies the target specification data and/or target performance data within an allowable range, which is set for the target specification data and/or target performance data input by the input function, is feasible, and providing the calculation result to the user, so as to support project planning by the user.
   Therefore, according to the above arrangement, the user can plan and verify a project of a new model vehicle which satisfies desired target specification and performance data fully or to some extent. More specifically, since the server computer 1 provides to the user not only a project of a new model vehicle which satisfies desired target specification and performance data fully, but also a project of a new model vehicle which satisfies them to some extent, even when the user is dissatisfied with the calculation result provided by the server computer 1, he or she can easily recognize bottlenecks to be eliminated, thus improving the efficiency of the project planning process of a new model vehicle.
(9) In this embodiment, the allowable range is arbitrarily set by the user, and when the user sets to reject a setup of the allowable range for the target specification data and/or target performance data, the information providing function verifies whether or not the new model vehicle is feasible without setting the allowable range of a corresponding information item.
   Therefore, according to the above arrangement, since the user himself or herself can arbitrarily set an allowable range, the support process by means of uniform automatic calculations of the server computer 1 can be flexibly made, thus improving convenience. When the user rejects to set the allowable range, since original data is used for the corresponding information item without modification, user's intention can be reflected on the support process by means of uniform automatic calculations of the server computer 1.
(10) In this embodiment, the allowable range is automatically set by the server computer 1 for each information item of the target specification data and/or target performance data, and when a priority order (region 205 in Fig. 20B) is set for each information item of the target specification data and/or target performance data of the new model vehicle, the information providing function sets a broader allowable range for a corresponding information item as the set priority order of that information item is lower.
   Therefore, according to the above arrangement, the load on user's operation can be reduced.
(11) For example, it is preferable that a restriction value (weight, cost, size, shape, interference margin with another part, and the like) can be set for the allowable range. Preferably, the database stores specification information and performance information of a plurality of existing modules which form each of the plurality of existing vehicles, and specification information and performance information of a plurality of parts which form each existing module in association with each other by the information providing function, and
   the restriction value is set for the new model vehicle or a plurality of modules which form the vehicle.
   Therefore, according to the above arrangement, since a broader allowable range is set for the corresponding information item as the set priority order is lower, user's intention can be reflected on the support process by means of uniform automatic calculations of the server computer 1, and an impractical result can be prevented from being calculated upon making an automatic calculation in consideration of the allowable ranges of various information items by the computer process.
   Moreover, a new model vehicle project planning support system according to the above embodiment comprises:
(12) an information storage function of storing specification information and performance information of a plurality of existing modules which form each of a plurality of existing vehicles, and specification information and performance information of a plurality of parts which form each existing module in association with each other in a database (3, Fig. 4);
   an input function (region 71 in Fig. 7A, region 72 in Fig. 7B) of allowing a user to input, to a server computer 1, target performance data (e.g., mileage, drive stability, ride quality, and the like) of a plurality of items to be achieved by a new model vehicle to be planned as a whole; and
   an information notifying function (button 235 in Fig. 23B, button 245 in Fig. 24B) of calculating information indicating feasibility of a new model vehicle, which satisfies the target performance data of the plurality of items input by the input function, on the basis of information of respective items stored in the database, and notifying the user of the calculation result, so that at least one performance element required to achieve one of the target performance data of the plurality of items, which are to be achieved by the new model vehicle as a whole, specification information and performance information of at least one existing module required to satisfy the performance element, and specification information and performance information of a plurality of existing parts which form that existing module can be hierarchically displayed for each performance item (Fig. 25), so as to support project planning of the new model vehicle.
   Therefore, according to the above arrangement, a new model vehicle that satisfies the target performance can be easily planned with high accuracy. That is, according to the above arrangement, since a practical vehicle configuration required to implement the desired target performance in a new model vehicle is displayed while being classified into a plurality of layers, the operator can easily plan a new model vehicle that satisfies the target performance with high accuracy.
(13) In this embodiment, when the specification information and/or performance information of an existing module or part of the existing modules and parts, which are hierarchically displayed for each target performance of each individual item as the calculation result, are/is changed by user's selection operation, the information notifying function re-calculates the information indicating feasibility of the new model vehicle while reflecting the changed specification information and/or performance information (steps S37 to S39 in Fig. 28).
   In this case, information of each item stored in the database by the information storage function is stored as a standardized evaluation value (e.g., evaluation value on a scale from one to ten) as a scale common to respective items, and
   when the information notifying function calculates the information indicating feasibility of the new model vehicle on the basis of default evaluation values of respective items stored in the database, a change in specification information and/or performance information of the existing module or part that the user can make prior to the re-calculation is a change in numerical value from the default evaluation value to a desired evaluation value (region 81 in Fig. 8A, region 85 in Fig. 8B).
   Therefore, according to the above arrangement, since specification information and performance information can be easily changed by, e.g., changing the evaluation values using the displayed vehicle configuration in the plurality of layers, the best vehicle configuration of a new model vehicle that satisfies the target performance can be efficiently elaborated.
(14) In this embodiment, when the existing modules and/or existing parts, which are hierarchically displayed for each target performance of each individual item as the calculation result are replaced by other existing modules and/or existing parts stored in the database by user's selection operation, the information notifying function re-calculates the information indicating feasibility of the new model vehicle in accordance with a combination of the replaced existing modules and parts (steps S37 to S39 in Fig. 28).
   Therefore, according to the above arrangement, since the displayed vehicle configuration in the plurality of layers can be easily replaced by other existing modules and/or existing parts, the best vehicle configuration of a new model vehicle that satisfies the target performance can be efficiently elaborated.
   Furthermore, a new model vehicle project planning support system according to the above embodiment comprises:
(15) an information storage function of storing specification information and performance information of a plurality of existing vehicles in a database (3, Fig. 4);
   an input function (region 71 in Fig. 7A, region 72 in Fig. 7B) of allowing a user to input target specification and performance data of a new model vehicle to be planned in a server computer 1; and
   an information providing function (region 152 in Fig. 15A, region 156 in Fig. 15B, region 162 in Fig. 16) of calculating information associated with a vehicle configuration required to realize a new model vehicle that satisfies the target specification and performance data input by the input function as a practical vehicle on the basis of information of respective items stored in the database, and providing the calculation result to the user, so as to support project planning by the user.
   Therefore, according to the above arrangement, the user can efficiently and easily make a project planning process until a new model vehicle becomes feasible as an actual vehicle. More specifically, according to the above arrangement, when the user inputs only the target specification and performance data of a new model vehicle to be planned, since the server computer 1 provides information associated with a vehicle configuration required to realize a new model vehicle, which satisfies the input target specification and performance data, as a practical vehicle, the user can efficiently and easily make the project planning process by repeating the operation for inputting the target specification and performance data in accordance with the provided information as needed.
(16) In this embodiment, when a practical vehicle is infeasible based on the target specification and performance data input by the user using the input function, the information providing function provides a reason why the new model vehicle is infeasible as the practical vehicle, and a new vehicle configuration plan for realizing the new model vehicle as the practical vehicle, as the information associated with the vehicle configuration.
   Therefore, according to the above arrangement, when a practical vehicle is infeasible based on the target specification and performance data input by the user, a reason for this and a new vehicle configuration plan required to realize the vehicle are provided. Hence, the user can obtain adequacy of his or her setups, and an index for realization, thus rationally planning a new model vehicle.
(17) In this embodiment, information of each item stored in the database by the information storage function is stored as a standardized evaluation value as a scale common to respective items, and
   the information providing function seeks a combination of the specification information and performance information, which can most improve the evaluation value, so as to achieve the target specification and performance data input by the user using the input function, as the information associated with the vehicle configuration.
   Therefore, according to the above arrangement, even when a practical vehicle is infeasible based on the target specification and performance data input by the user, the server computer 1 automatically provides a combination of specification information and performance information, which can most improve an evaluation value. Hence, the user can efficiently and easily make a project planning process without repeating setups in the server computer 1 by operating the user terminal 2.
(18) In this embodiment, the input function allows the user to set a condition that the new model vehicle must satisfy (region 61 in Fig. 6A, region 62 in Fig. 6A), and
   when the user inputs the condition by the input function, the information providing function calculates the information associated with the vehicle configuration in consideration of the condition.

In this case, the condition that can be set using the input function includes at least one of items including an influence on an existing part, which is adopted as a carry-over part in the new model vehicle, of a plurality of existing parts which form the existing vehicle, a change in engine, an increase in cost, and an infeasible condition of a vehicle layout.

Therefore, according to the above arrangement, when conditions which must be examined most carefully upon planning a new model vehicle, such as an influence on an existing part adopted as a carry-over part, a change in engine, an increase in cost, an infeasible condition of a vehicle layout, and the like, are input, since information associated with a vehicle configuration is calculated in consideration of such conditions, a more practical project planning process can be efficiently and easily executed.

As many apparently widely different embodiments of the present invention can be made without departing from the spirit and scope thereof, it is to be understood that the invention is not limited to the specific embodiments thereof except as defined in the claims.

## Claims

1. A computer program for supporting project planning of a new model vehicle, said program **characterized by** making operation instructions that make a computer (1) implement:
an information storage function of storing specification information and performance information of a plurality of existing vehicles in a database (3, Fig. 4);
an input function (71, 72) of allowing a user to input target specification and performance data of a new model vehicle to be planned in the computer; and
an information providing function (151, 155, 161) of calculating information indicating feasibility of a new model vehicle that satisfies the target specification and performance data input by said input function on the basis of information of respective items stored in the database, and providing the calculation result to the user, so as to support project planning by the user.

2. The program according to claim 1, **characterized in that** the database further stores information associated with a plurality of existing parts which form the plurality of existing vehicles in association with the specification information and performance information of the plurality of existing vehicles by said information storage function,
said program further makes the computer implement an existing part selection function (91, Figs. 10 and 11) of allowing the user to select a desired existing part from the plurality of existing parts as a carry-over part which is desired to be adopted in the new model vehicle with reference to information of respective items stored in the database, prior to execution of said information providing function, and
when the user selects at least one existing part by said existing part selection function, said information providing function calculates the information indicating feasibility of the new model vehicle in consideration of information associated with the selected existing part.

3. The program according to claim 1, **characterized in that** the database further stores information associated with cost of a plurality of existing parts which form the plurality of existing vehicles in association with the specification information and performance information of the plurality of existing vehicles by said information storage function,
said input function can input target cost for the new model vehicle or each module which is formed by a plurality of parts that form the new model vehicle (61, 62), and
when the user inputs the target cost by said input function, said information providing function calculates the information indicating feasibility of the new model vehicle that satisfies the target specification data, target performance data, and target cost, on the basis of information of respective items stored in the database, and provides the calculation result to the user.

4. The program according to claim 1, **characterized in that** said input function can input at least one of performance items including mileage, engine performance, drive stability, and ride quality of the new model vehicle as the target performance.

5. The program according to claim 1, **characterized in that** the database further stores identification information used to specify an existing module, to which each individual existing part belongs, of a plurality of existing modules which form the plurality of existing vehicles and each of which consists of a plurality of existing parts, in association with the specification information and performance information of the plurality of existing vehicles by said information storage function,
said program further makes the computer implement an existing module selection function (91, Figs. 10 and 11) of allowing the user to select a desired existing module from the plurality of existing modules as a carry-over module which is desired to be adopted in the new model vehicle by referring to the database using the identification information specified by user's selection operation as a search key, prior to execution of said information providing function, and
when the user selects at least one existing module by said existing module selection function, said information providing function calculates the information indicating feasibility of the new model vehicle in consideration of the selected existing module.

6. The program according to claim 1, **characterized in that** when the user inputs the target specification and performance data of the new model vehicle across a plurality of items by said input function, the user can further input a priority order that said information providing function handles the input target specification and performance data of the plurality of items (201, 205), and
when the user inputs the priority order by said input function, said information providing function calculates the information indicating feasibility of the new model vehicle in consideration of the input priority order.

7. The program according to claim 1, **characterized in that** said information providing function provides a calculation result for each module which forms the new model vehicle and consists of a plurality of parts to the user as the information indicating feasibility of the new model vehicle.

8. The program according to claim 1, **characterized in that** said information providing function provides information (151, 155, 161) associated with a degree of achievement of the target specification data and/or target performance data input by said input function as the information indicating feasibility of the new model vehicle.

9. The program according to claim 1 or 8, **characterized in that** said information providing function provides information (152, 156, 162) associated with suggestions for improving feasibility of the new model vehicle together with the information indicating feasibility of the new model vehicle.

10. A computer program for supporting project planning of a new model vehicle, said program **characterized by** making operation instructions that make a computer (1) implement:
an information storage function of storing specification information and performance information of a plurality of existing vehicles in a database (3, Fig. 4);
an input function (71, 72) of allowing a user to input target specification and performance data of a new model vehicle to be planned in the computer; and
an information providing function (Figs. 15A, 15B, and 16) of calculating, based on information of respective items stored in the database, whether or not the new model vehicle that satisfies the target specification data and/or target performance data within an allowable range, which is set for the target specification data and/or target performance data input by said input function, is feasible, and providing the calculation result to the user, so as to support project planning by the user.

11. The program according to claim 10, **characterized in that** the allowable range is arbitrarily set by the user.

12. The program according to claim 11, **characterized in that** when the user sets to reject a setup of the allowable range for the target specification data and/or target performance data, said information providing function verifies whether or not the new model vehicle is feasible without setting the allowable range of a corresponding information item.

13. The program according to claim 10, **characterized in that** the allowable range is automatically set by the computer for each information item of the target specification data and/or target performance data.

14. The program according to claim 13, **characterized in that** when a priority order (205) is set for each information item of the target specification data and/or target performance data of the new model vehicle, said information providing function sets a broader allowable range for a corresponding information item as the set priority order of that information item is lower.

15. The program according to claim 10, **characterized in that** a restriction value can be set for the allowable range.

16. The program according to claim 15, **characterized in that** the restriction value is set in advance.

17. The program according to claim 15, **characterized in that** the restriction value includes at least one of a weight, cost, size, shape, and interference margin with another part.

18. The program according to claim 15, **characterized in that** the database stores specification information and performance information of a plurality of existing modules which form each of the plurality of existing vehicles, and specification information and performance information of a plurality of parts which form each existing module in association with each other by said information providing function, and
the restriction value is set for the new model vehicle or a plurality of modules which form the vehicle.

19. A computer program for supporting project planning of a new model vehicle, said program **characterized by** making operation instructions that make a computer (1) implement:
an information storage function of storing specification information and performance information of a plurality of existing modules which form each of a plurality of existing vehicles, and specification information and performance information of a plurality of parts which form each existing module in association with each other in a database (3, Fig. 4);
an input function (71, 72) of allowing a user to input, to the computer, target performance data of a plurality of items to be achieved by a new model vehicle to be planned as a whole; and
an information notifying function (235, 245) of calculating information indicating feasibility of a new model vehicle, which satisfies the target performance data of the plurality of items input by said input function, on the basis of information of respective items stored in the database, and notifying the user of the calculation result, so that at least one performance element required to achieve one of the target performance data of the plurality of items, which are to be achieved by the new model vehicle as a whole, specification information and performance information of at least one existing module required to satisfy the performance element, and specification information and performance information of a plurality of existing parts which form that existing module can be hierarchically displayed for each performance item (Fig. 25), so as to support project planning of the new model vehicle.

20. The program according to claim 19, **characterized in that** when the specification information and/or performance information of an existing module or part of the existing modules and parts, which are hierarchically displayed for each target performance of each individual item as the calculation result, are/is changed by user's selection operation, said information notifying function re-calculates the information indicating feasibility of the new model vehicle while reflecting the changed specification information and/or performance information (S37 - S39).

21. The program according to claim 20, **characterized in that** information of each item stored in the database by said information storage function is stored as a standardized evaluation value as a scale common to respective items, and
when said information notifying function calculates the information indicating feasibility of the new model vehicle on the basis of default evaluation values of respective items stored in the database, a change in specification information and/or performance information of the existing module or part that the user can make prior to the re-calculation is a change in numerical value from the default evaluation value to a desired evaluation value (81, 85).

22. The program according to claim 19, **characterized in that** when the existing modules and/or existing parts, which are hierarchically displayed for each target performance of each individual item as the calculation result are replaced by other existing modules and/or existing parts stored in the database by user's selection operation, said information notifying function re-calculates the information indicating feasibility of the new model vehicle in accordance with a combination of the replaced existing modules and parts (S37 - S39).

23. The program according to claim 19, **characterized in that** the target performance data of the plurality of items to be achieved by the new model vehicle as a whole include at least one of items including mileage, drive stability, and ride quality.

24. The program according to claim 23, **characterized in that** the performance element required to achieve the mileage as the target performance includes at least one of items including engine performance, drive system performance, a vehicle weight, aerodynamics performance, and a rolling resistance.

25. The program according to claim 23, **characterized in that** the performance element required to achieve the drive stability as the target performance includes at least one of items including tire & suspension characteristics, engine performance, drive system performance, a weight, weight distribution, and a steering gear ratio.

26. A computer program for supporting project planning of a new model vehicle, said program **characterized by** making operation instructions that make a computer (1) implement:
an information storage function of storing specification information and performance information of a plurality of existing vehicles in a database (3, Fig. 4);
an input function (71, 72) of allowing a user to input target specification and performance data of a new model vehicle to be planned in the computer; and
an information providing function (152, 156, 162) of calculating information associated with a vehicle configuration required to realize a new model vehicle that satisfies the target specification and performance data input by said input function as a practical vehicle on the basis of information of respective items stored in the database, and providing the calculation result to the user, so as to support project planning by the user.

27. The program according to claim 26, **characterized in that** when a practical vehicle is infeasible based on the target specification and performance data input by the user using said input function, said information providing function provides a reason why the new model vehicle is infeasible as the practical vehicle, and a new vehicle configuration plan for realizing the new model vehicle as the practical vehicle, as the information associated with the vehicle configuration.

28. The program according to claim 26, **characterized in that** information of each item stored in the database by said information storage function is stored as a standardized evaluation value as a scale common to respective items, and
said information providing function seeks a combination of the specification information and performance information, which can most improve the evaluation value, so as to achieve the target specification and performance data input by the user using said input function, as the information associated with the vehicle configuration.

29. The program according to claim 26, **characterized in that** said input function allows the user to set a condition that the new model vehicle must satisfy (61, 62), and
when the user inputs the condition by said input function, said information providing function calculates the information associated with the vehicle configuration in consideration of the condition.

30. The program according to claim 29, **characterized in that** the condition that can be set using said input function includes at least one of items including an influence on an existing part, which is adopted as a carry-over part in the new model vehicle, of a plurality of existing parts which form the existing vehicle, a change in engine, an increase in cost, and an infeasible condition of a vehicle layout.

31. An apparatus (1) for supporting project planning of a new model vehicle, **characterized by** comprising:
information storage means for storing specification information and performance information of a plurality of existing vehicles in a database (3, Fig. 4);
input means (71, 72) for allowing a user to input target specification and performance data of a new model vehicle to be planned in the computer; and
information providing means (151, 155, 161) for calculating information indicating feasibility of a new model vehicle that satisfies the target specification and performance data input by said input means on the basis of information of respective items stored in the database, and providing the calculation result to the user, so as to support project planning by the user.

32. An apparatus (1) for supporting project planning of a new model vehicle, **characterized by** comprising:
information storage means for storing specification information and performance information of a plurality of existing vehicles in a database (3, Fig. 4);
input means (71, 72) for allowing a user to input target specification and performance data of a new model vehicle to be planned in the computer; and
information providing means (Figs. 15A, 15B, and 16) for calculating, based on information of respective items stored in the database, whether or not the new model vehicle that satisfies the target specification data and/or target performance data within an allowable range, which is set for the target specification data and/or target performance data input by said input means, is feasible, and providing the calculation result to the user, so as to support project planning by the user.

33. An apparatus (1) for supporting project planning of a new model vehicle, **characterized by** comprising:
information storage means for storing specification information and performance information of a plurality of existing modules which form each of a plurality of existing vehicles, and specification information and performance information of a plurality of parts which form each existing module in association with each other in a database (3, Fig. 4);
input means (71, 72) for allowing a user to input, to the computer, target performance data of a plurality of items to be achieved by a new model vehicle to be planned as a whole; and
information notifying means (235, 245) for calculating information indicating feasibility of a new model vehicle, which satisfies the target performance data of the plurality of items input by said input means, on the basis of information of respective items stored in the database, and notifying the user of the calculation result, so that at least one performance element required to achieve one of the target performance data of the plurality of items, which are to be achieved by the new model vehicle as a whole, specification information and performance information of at least one existing module required to satisfy the performance element, and specification information and performance information of a plurality of existing parts which form that existing module can be hierarchically displayed for each performance item (Fig. 25), so as to support project planning of the new model vehicle.

34. An apparatus (1) for supporting project planning of a new model vehicle, **characterized by** comprising:
information storage means for storing specification information and performance information of a plurality of existing vehicles in a database (3, Fig. 4);
input means (71, 72) for allowing a user to input target specification and performance data of a new model vehicle to be planned in the computer; and
information providing means (152, 156, 162) for calculating information associated with a vehicle configuration required to realize a new model vehicle that satisfies the target specification and performance data input by said input means as a practical vehicle on the basis of information of respective items stored in the database, and providing the calculation result to the user, so as to support project planning by the user.

35. A method for supporting project planning of a new model vehicle, **characterized by** comprising:
an information storage step of storing specification information and performance information of a plurality of existing vehicles in a database (3, Fig. 4); and
an information providing step of calculating information indicating feasibility of a new model vehicle to be planned that satisfies target specification and performance data of the new model vehicle, which are input by a user on the basis of information of respective items stored in the database, and providing the calculation result to the user via a man-machine interface (151, 155, 161), so as to support project planning by the user.

36. A method for supporting project planning of a new model vehicle, **characterized by** comprising:
an information storage step of storing specification information and performance information of a plurality of existing vehicles in a database (3, Fig. 4); and
an information providing step of calculating, based on information of respective items stored in the database, whether or not a new model vehicle to be planned that satisfies target specification data and/or target performance data of the new model vehicle, which are input by a user, within an allowable range, which is set for the target specification data and/or target performance data, is feasible, and providing the calculation result to the user via a man-machine interface (Figs. 15A, 15B, and 16), so as to support project planning by the user.

37. A method for supporting project planning of a new model vehicle, **characterized by** comprising:
an information storage step of storing specification information and performance information of a plurality of existing modules which form each of a plurality of existing vehicles, and specification information and performance information of a plurality of parts which form each existing module in association with each other in a database (3, Fig. 4); and
an information notifying step of calculating information indicating feasibility of a new model vehicle to be planned, which satisfies target performance data of a plurality of items to be achieved by the new model vehicle, which are input by a user, on the basis of information of respective items stored in the database, and notifying the user of the calculation result, so that at least one performance element required to achieve one of the target performance data of the plurality of items, which are to be achieved by the new model vehicle as a whole, specification information and performance information of at least one existing module required to satisfy the performance element, and specification information and performance information of a plurality of existing parts which form that existing module can be hierarchically displayed for each performance item (Fig. 25), so as to support project planning of the new model vehicle.

38. A method for supporting project planning of a new model vehicle, **characterized by** comprising:
an information storage step of storing specification information and performance information of a plurality of existing vehicles in a database (3, Fig. 4); and
an information providing step of calculating information associated with a vehicle configuration required to realize a new model vehicle to be planned that satisfies target specification and performance data of the new model vehicle, which are input by a user, as a practical vehicle on the basis of information of respective items stored in the database, and providing the calculation result to the user via a man-machine interface, so as to support project planning by the user.
